# EUROPEAN PATENT SPECIFICATION

(11) **EP 4 428 999 B1**
(45) Date of publication and mention of the grant of the patent: **08.04.2026**
(21) Application number: 24158963.9
(22) Date of filing: 21.02.2024
(51) Int. Cl.: H01M 50/213, H01M 50/296, H01M 50/503, H01M 50/505, H01M 50/516, H01M 50/521

(54) **BATTERY PACK BUSBAR**
BATTERIEPACKSAMMELSCHIENE
BARRE OMNIBUS DE BLOC-BATTERIE

(30) Priority: 27.02.2023 US 202363487083 P
(43) Date of publication of application: 11.09.2024
(73) Proprietor: Milwaukee Electric Tool Corporation, Brookfield, WI 53005 (US)
(72) Inventor: JOSEPH, Audrin Alex, Milwaukee, 53202 (US)
(74) Representative: Forresters IP LLP

(56) References cited:
- JP-B2- 6 232 299
- US-A1- 2019 372 069
- US-A1- 2022 263 181

## Description

The present application claims the benefit of U.S. Provisional Patent Application No. 63/487,083, filed February 27, 2023.

### FIELD

The present disclosure relates to a rechargeable battery pack. More particularly, the present disclosure relates to a busbar for a battery pack having multiple battery cells. US 2022/263181 A1 refers to a battery module comprising sub-module components or bricks, that facilitate efficient assembly utilising common hand tools. JP 6232299 B2 refers to a battery module with a case that is divided. US 2019/372069 A1 refers to a battery module and battery pack having a guide coupling structure.

### SUMMARY

The invention is defined by the appended claims.

In some aspects, the techniques described herein relate to a battery pack including: a positive pack terminal; a negative pack terminal; a cell assembly having a plurality of battery cells; a busbar strap having a current collection tab and a battery connection plate, the battery connection plate is electrically connected to the battery cell closest to the current collection tab; and an electrical pathway that extends between the current collection tab and the battery connection plate, the electrical pathway includes a first path portion that extends between the current collection tab and an area past the battery connection plate and a second path portion that extends between the area past the battery connection plate and the battery connection plate.

In some aspects, the techniques described herein relate to a battery pack, wherein the busbar strap includes an inner strap and an outer strap.

In some aspects, the techniques described herein relate to a battery pack, wherein the inner strap is electrically connected to the outer strap at a weld, and the first path portion connects to the second path portion at the weld.

In some aspects, the techniques described herein relate to a battery pack, wherein the inner strap is formed from a first material and the outer strap is formed from a second, different material.

**In** some aspects, the techniques described herein relate to a battery pack, wherein the busbar strap is a unitary body.

**In** some aspects, the techniques described herein relate to a battery pack, wherein the busbar strap includes another battery connection plate that is electrically connected to the battery cell furthest from the current collection tab, and the battery pack further includes another electrical pathway that extends between the current collection tab and the other battery connection plate.

**In** some aspects, the techniques described herein relate to a battery pack, wherein a resistance of the other electrical pathway is within 10% of a resistance of the electrical pathway.

**In** some aspects, the techniques described herein relate to a battery pack, wherein a resistance of the other electrical pathway is within 5% of a resistance of the electrical pathway.

In some aspects, the techniques described herein relate to a battery pack, wherein the busbar strap includes a middle battery connection plate that is electrically connected to a middle battery cell located between the battery cell closest to the current collection tab and the battery cell furthest from the current collection tab, and the battery pack further includes a middle electrical pathway that extends between the current collection tab and the middle battery connection plate.

In some aspects, the techniques described herein relate to a battery pack, wherein a resistance of the middle electrical pathway is within 10% of a resistance of the electrical pathway.

In some aspects, the techniques described herein relate to a battery pack including: a positive pack terminal; a negative pack terminal: a cell assembly having a first battery cell, a second battery cell, and a third battery cell; and a busbar strap having a battery connection area and an elongated extension, the battery connection area having a lobe connected to the first battery cell and another lobe connected to the second and/or third battery cells, the lobe and the other lobe are connected at a lobe connection area, the elongated extension is connected to the battery connection area adjacent to the lobe connection area.

In some aspects, the techniques described herein relate to a battery pack, wherein the elongated extension has a current collection tab, and the current collection tab is configured to be electrically connected to one of the positive pack terminal and the negative pack terminal.

In some aspects, the techniques described herein relate to a battery pack, wherein the first battery cell is a first distance from the elongated extension, the third battery cell is a third distance from the elongated extension, and the first distance is shorter than the third distance.

In some aspects, the techniques described herein relate to a battery pack, wherein the first battery cell is configured to define a first electrical pathway from the first battery cell to the elongated extension, the first electrical pathway having a first electrical voltage, the third battery cell is configured to define a third electrical pathway from the third battery cell to the elongated extension, the third electrical pathway having a third electrical voltage, and the third electrical voltage is within 5% of the first electrical voltage.

In some aspects, the techniques described herein relate to a battery pack, wherein the busbar strap has a mounting tab located between the lobe and the other lobe.

In some aspects, the techniques described herein relate to a battery pack including: a busbar strap having a current collection tab and a plurality of battery connection plates; and a plurality of battery cells connected to the busbar strap at the plurality of battery connection plates, wherein each of the plurality of battery cells is configured to transfer electricity through a respective battery connection plate of the plurality of battery connection plates and to the current collection tab along a respective electrical pathway, each respective electrical pathway has a pathway resistance, and a largest pathway resistance is less than 170% of a smallest pathway resistance.

In some aspects, the techniques described herein relate to a battery pack, wherein the largest pathway resistance is less than 140% of the smallest pathway resistance.

In some aspects, the techniques described herein relate to a battery pack, wherein the largest pathway resistance is less than 130% of the smallest pathway resistance.

In some aspects, the techniques described herein relate to a battery pack, wherein the largest pathway resistance is less than 110% of the smallest pathway resistance.

In some aspects, the techniques described herein relate to a battery pack, wherein the largest pathway resistance is less than 106% of the smallest pathway resistance.

Features and aspects of the disclosure will become apparent by consideration of the following detailed description and accompanying drawings.

### BRIEF DESCRIPTION OF THE DRAWINGS

FIG. 1 is a schematic section view of a battery pack, according to embodiments disclosed herein.
FIGS. 2A-2B are perspective views of a battery pack.
FIG. 3A is a front view of a negative end strap, according to embodiments disclosed herein.
FIG. 3B is a perspective view of a positive end strap, according to embodiments disclosed herein.
FIG. 3C is a schematic view of the electrical pathways of the negative end strap of FIG. 3A.
FIG. 4 is a chart showing the cell temperatures in a battery pack with the end straps of FIGS. 3A-3C.
FIG. 5A is a perspective view of the negative end strap of FIG. 3A with an electrical bypass pathway.
FIG. 5B is a perspective view of the positive end strap of FIG. 3B with two electrical bypass pathways.
FIG. 6A is a front view of the negative end strap of FIG. 5A attached to a battery pack.
FIG. 6B is a front view of the positive end strap of FIG. 5B attached to a battery pack.
FIG. 7 is a chart showing the cell temperatures in a battery pack with the end straps of FIGS. 5A-5B.
FIG. 8A is a heat map showing the cell temperatures in a battery pack with the end straps of FIGS. 3A-3C.
FIG. 8B is a heat map showing the cell temperatures in a battery pack with the end straps of FIGS. 5A-5B.
FIGS. 9A-9B is a front view of another embodiment of a negative end strap, according to embodiments disclosed herein.
FIGS. 10A-10B are front and rear views of another embodiment of a negative end strap, according to embodiments disclosed herein.
FIG. 11 is a front view of the outer strap of the negative end strap of FIGS. 10A-10B.
FIG. 12 is a rear view of the inner strap of the negative end strap of FIGS. 10A-10B.
FIG. 13 is a schematic rear view of the electrical pathways of the negative end strap of FIGS. 10A-10B.
FIG. 14 is a chart showing the resistance values of the electrical pathways of the negative end strap of FIGS. 10A-10B.
FIGS. 15A-15B are front and rear views of another embodiment of a positive end strap, according to embodiments disclosed herein.
FIG. 16 is a front view of the outer strap of the positive end strap of FIGS. 15A-15B.
FIG. 17 is a rear view of the inner strap of the positive end strap of FIGS. 15A-15B.
FIGS. 18A-18B are schematic views of the electrical pathways of the positive end strap of FIGS. 15A-15B.
FIG. 19 is a chart showing the resistance values of the electrical pathways of the positive end strap of FIGS. 15A-15B.
FIGS. 20A-20B are front and rear views of another embodiment of a positive end strap, according to embodiments disclosed herein.
FIGS. 21A-21B are schematic views of the electrical pathways of the positive end strap of FIGS. 20A-20B.
FIG. 22 is a chart showing the resistance values of the electrical pathways of the positive end strap of FIGS. 24A-24B.
FIG. 23A is a front view of another embodiment of a positive end strap, according to embodiments disclosed herein.
FIG. 23B is a chart showing the resistance values of the electrical pathways of the positive end strap of FIGS. 21A-21B and FIG. 23A.
FIGS. 24A-24B are front and rear views of another embodiment of a positive end strap, according to embodiments disclosed herein.
FIGS. 25A-25B are schematic views of the electrical pathways of the positive end strap of FIGS. 24A-24B.
FIGS. 26A-26B are front and rear views of another embodiment of a positive end strap, according to embodiments disclosed herein.
FIGS. 27A-27B are schematic views of the electrical pathway of the positive end strap of FIGS. 26A-26B.
FIG. 28 is a front view of embodiment of a positive end strap, according to embodiments disclosed herein.
FIG. 29 is a schematic view of the electrical pathway of the negative end strap of FIG. 28.
FIG. 30 is a front view of another embodiment of a negative end strap, according to embodiments disclosed herein.
FIG. 31 is a schematic view of the electrical pathway of the negative end strap of FIG. 30.
FIGS. 32A-32B are front and rear views of another embodiment of a positive end strap, according to embodiments disclosed herein.
FIGS. 33A-33B are schematic views of the electrical pathway of the positive end strap of FIGS. 32A-32B.

### DETAILED DESCRIPTION

Before any embodiments of the disclosure are explained in detail, it is to be understood that the disclosure is not limited in its application to the details of construction and the arrangement of components set forth in the following description or illustrated in the drawings. The disclosure is capable of other embodiments and of being practiced or of being carried out in various ways. Also, it is to be understood that the phraseology and terminology used herein is for the purpose of description and should not be regarded as limiting.

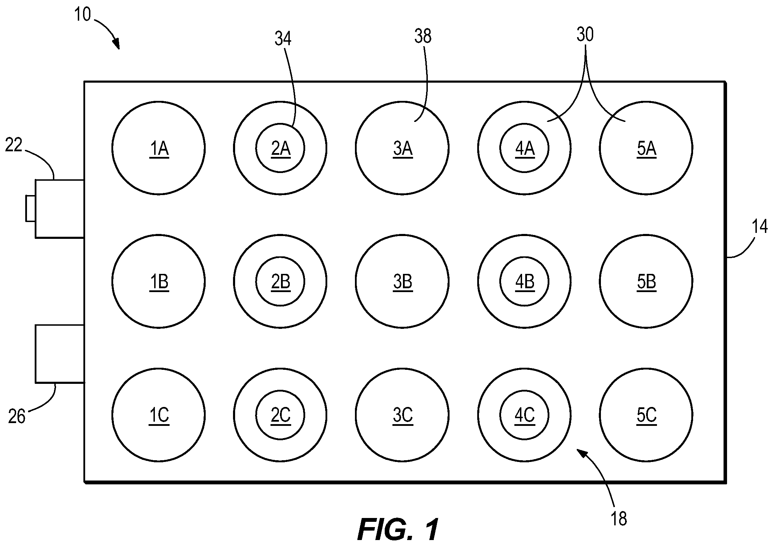

FIG. 1 is a schematic of an exemplary battery pack 10. The battery pack 10 includes a housing 14 that supports a cell assembly 18, a positive battery pack terminal 22, and a negative battery pack terminal 26. The battery pack 10 is configured to be electrically connected to a load (e.g., a power tool) through the positive and negative battery pack terminals 22, 26.

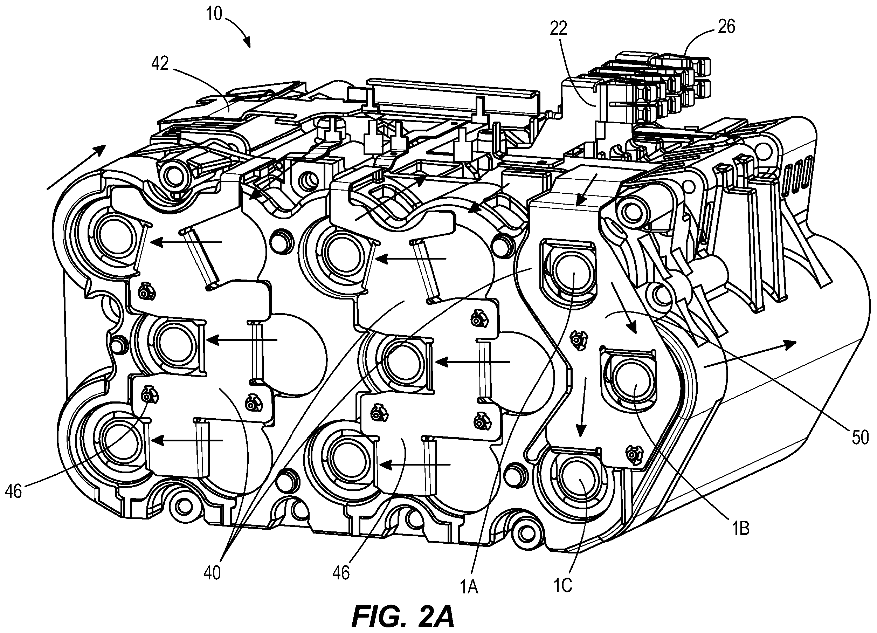

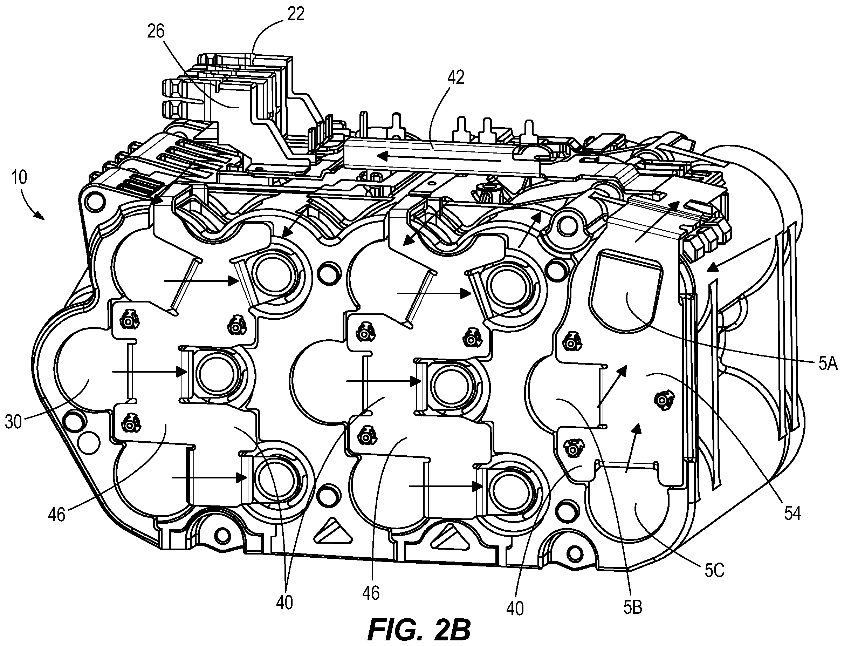

The cell assembly 18 is comprised of a plurality of cells 30 and a cell busbar assembly 40 (shown in FIG. 2A and discussed in more detail below). In the illustrated embodiment, the cell assembly 18 is comprised of fifteen cells. More specifically, the illustrated cell assembly 18 includes three rows (A-C) and five columns (1-5) of cells 30. Each cell in the plurality of cells 30 can be named (e.g., 1A-5C) based on the row and column that the cell is in. Each cell 1A-5C includes a positive cell terminal 34 and a negative cell terminal 38. In other embodiments, the cell assembly 18 may have a different number of cells.

With reference to FIGS. 2A-2B, the cell busbar assembly 40 includes a plurality of busbar straps 46. Each of the busbar straps 46 electrically connects the cells 30 in each column 1-5 such that electricity can be transferred from the cells 30 to the busbar strap. The plurality of busbar straps 46 include a positive end strap 50 and a negative end strap 54. The positive end strap 50 is connected to the positive cell terminal 34 of the battery cells 30 in column 1 (e.g., cells 1A, 1B, 1C), while the negative end strap 54 is connected to the negative cell terminal 38 of the battery cells 30 in column 5 (e.g., cells 5A, 5B, 5C). The positive end strap 50 and the negative end strap 54 may have a different configuration than the other busbars in the plurality of busbar straps 46.

The cell busbar assembly 40 may be connected to a terminal busbar assembly 42 such that there is an electrical pathway between the cells 30 and the battery pack terminals 22, 26.

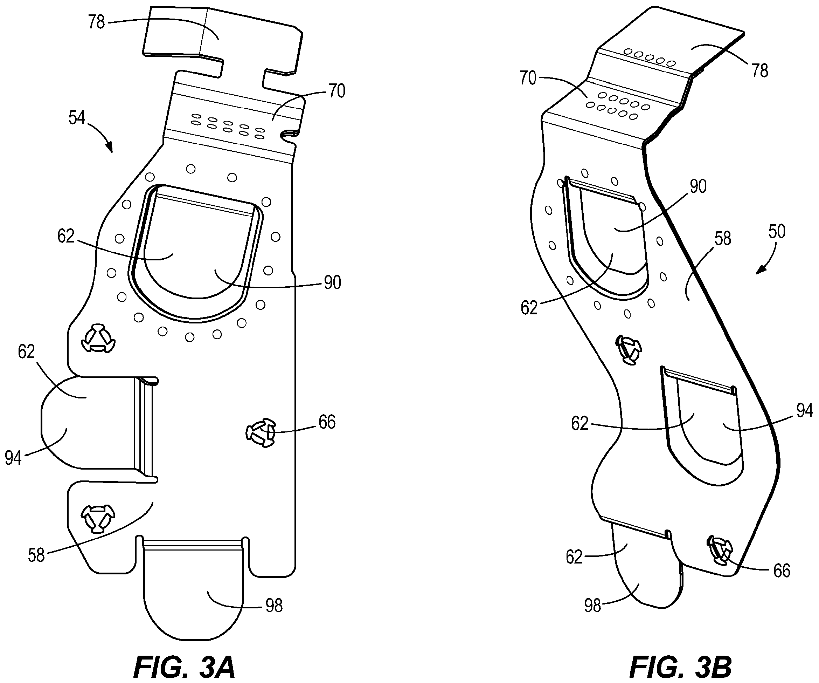

FIG. 3A shows the negative end strap 54, and FIG. 3B shows the positive end strap 50. The negative end strap 54 and the positive end strap 50 may have similar components, although they may have different configurations (e.g., body shapes). The end straps 50, 54 include a strap body 58 that connects a plurality of battery connection plates 62 and an extension 70. The strap body 58 may also include a set of mounting tabs or mounting holes 66 that secure the end strap 50, 54 to the battery pack 10 and the cell assembly 18. The strap body 58 may have a generally flat or plate shape.

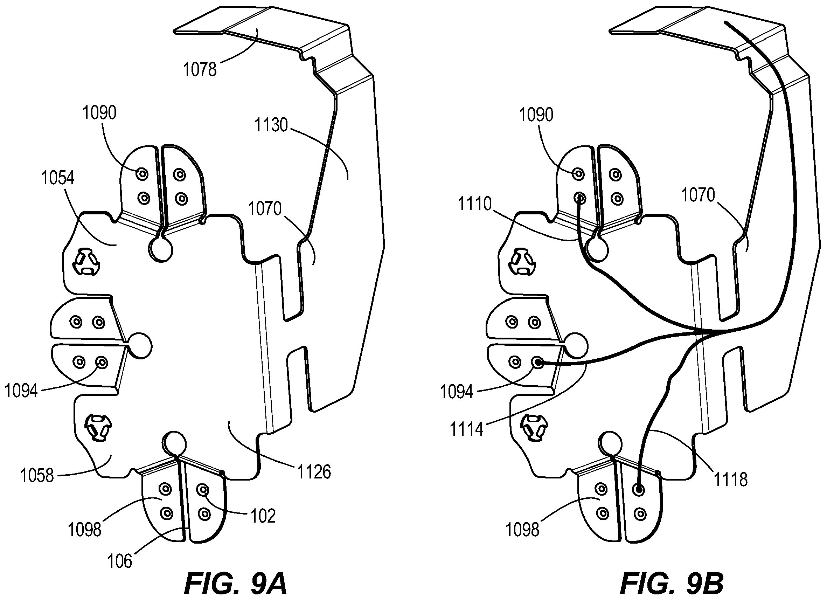

The plurality of battery connection plates 62 include at least a first battery connection plate 90 that connects to a battery cell 30 in the first row (e.g., 1A, 5A), a second battery connection plate 94 that connects to a battery cell 30 in the second row (e.g., 1B, 5B), and a third battery connection plate 98 that connects to a battery cell in the third row (e.g., 1C, 5C). Some of the plurality of battery connection plates 62 may form a peripheral edge of the strap body 58 (e.g., third battery connection plate 98) and some of the plurality of battery connection plates 62 may be disposed in the middle of the strap body 58 (e.g., the first battery connection plate 90). The battery connection plates 62 may be recessed relative to the strap body 58 such that the plurality of battery connection plates 62 can connect to the battery cells 30. In some embodiments, each of the battery connection plates 62 has a semicircular shape. In other embodiments, each or some of the battery connection plates 62 may include contact dimples 102 (FIGS. 9A and 9B) that contact the battery cell 30 and/or a split 106 that increases the flexibility of the battery connection plate.

The extension 70 defines an end of the strap body 58 that is opposite the third battery connection plate 98. The extension 70 may include a current collection tab 78 disposed at an end of the extension 70. The current collection tab 78 electrically connects the extension 70 and the end strap 50, 54 to the terminal bus bar assembly 42 such that the plurality of battery cells connected to the end strap 50, 54 (e.g., 1A-1C or 5A-5C) are electrically connected to either the positive pack terminal 22 or the negative pack terminal 26.

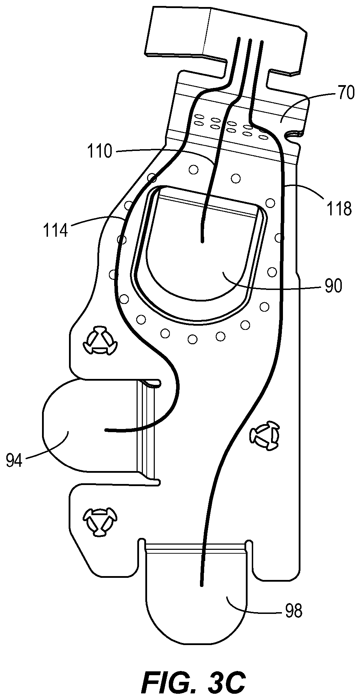

With reference to FIG. 3C, the end straps 50, 54 have a first power route, or a first electrical pathway, 110 that extends between the first battery connection plate 90 and the current collection tab 78; a second power route, or a second electrical pathway, 114 that extends between the second battery connection plate 94 and the current collection tab 78; and a third power route, or a third electrical pathway, 118 that extends between the third battery connection plate 98 to the current collection tab 78. Each electrical pathway 110, 114, 118 has a pathway resistance value.

Each electrical pathway 110, 114, 118 in the negative end strap 54 has its own pathway resistance value. The first electrical pathway 110 has a first resistance of 646 micro-ohms. The second electrical pathway 114 has a second resistance of 951 micro-ohms. The third electrical pathway 118 has a third resistance of 1044 micro-ohms. The first resistance has a current bias of 75.4%; the second resistance has a current bias of 16.14%; and the third resistance has a current bias of 8.46%. The largest pathway resistance (e.g., the third resistance) is less than 170% of the smallest pathway resistance (e.g., the first resistance). The largest pathway resistance is about 161% of the smallest pathway resistance.

Each electrical pathway 110, 114, 118 in the positive end strap 50 has its own pathway resistance value. The first electrical pathway 110 has a first resistance of 282.48 micro-ohms. The second electrical pathway 114 has a second resistance of 531.84 micro-ohms. The third electrical pathway 118 has a third resistance of 802.66 micro-ohms. The first resistance has a current bias of 69.4%; the second resistance has a current bias of 21.59%; and the third resistance has a current bias of 9%. The largest pathway resistance (e.g., the third resistance) is about 284% of the smallest pathway resistance (e.g., the first resistance).

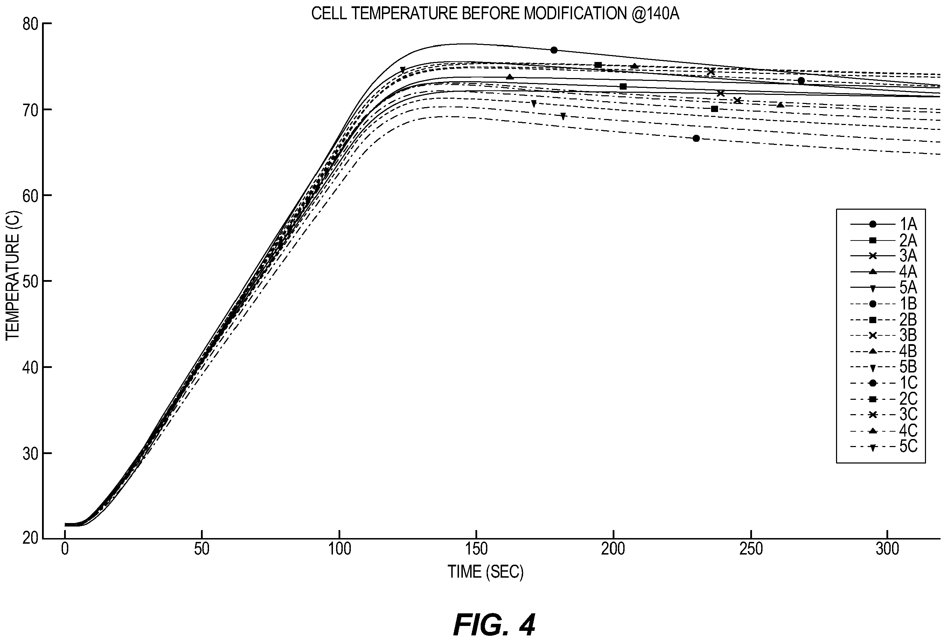

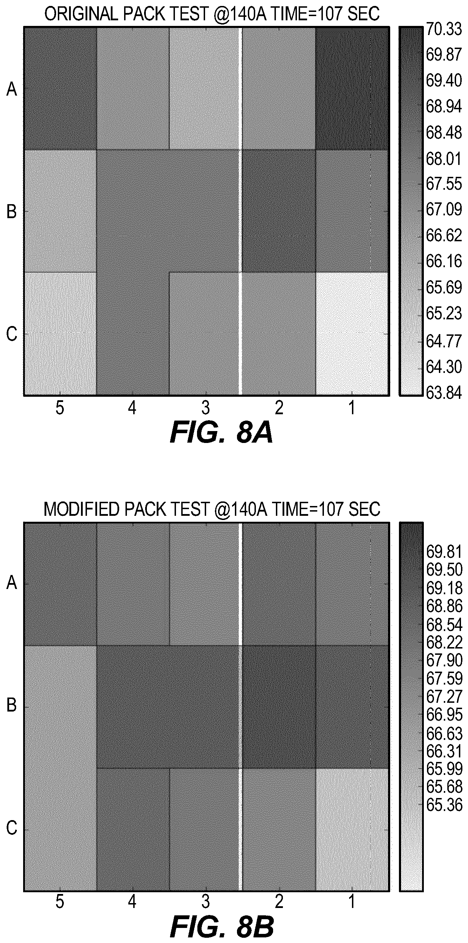

FIGS. 4 and 7-8B illustrate the advantages of the electrical pathways in an end strap having similar resistances. FIGS. 4 and 8A show the temperature of an end strap (e.g., end straps 50, 54) having electrical pathways with uneven lengths. Compared to the rest of the cells, cells 1A and 5A have higher temperatures because they have a shorter electrical pathway and less resistance than the rest of the cells.

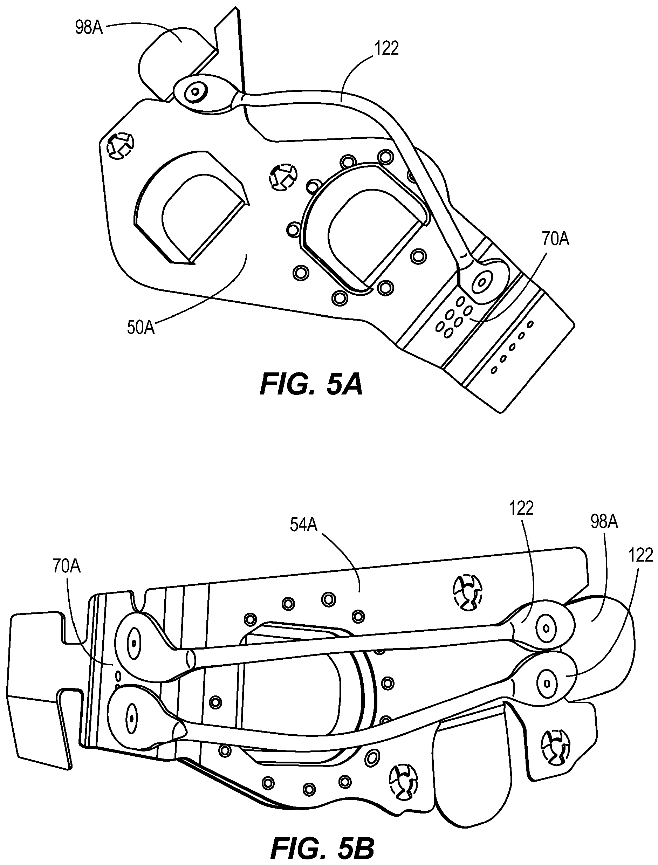

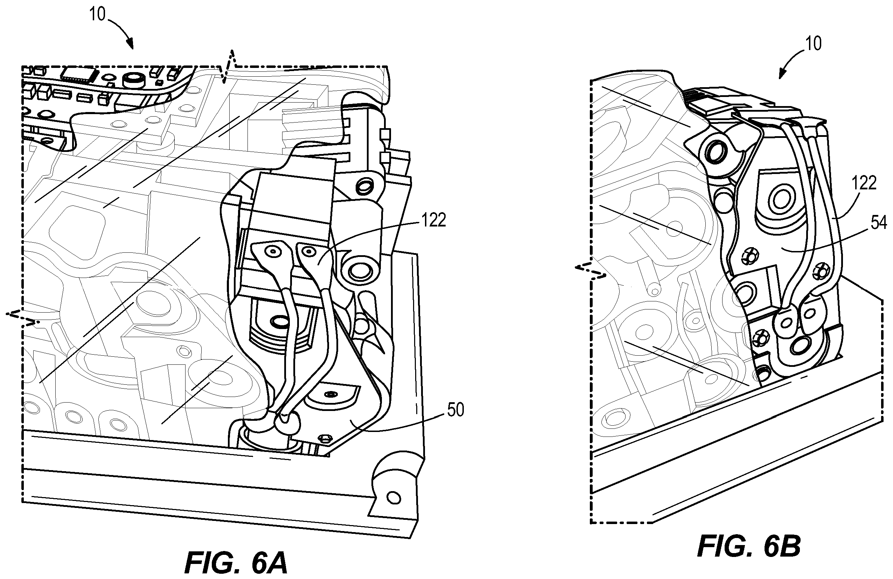

To lower the temperature difference between the cells 1A, 5A and the remainder of the cells, an electrical bypass 122 can be added to an end strap 50A, 54A (shown in FIGS. 5A-6B). The electrical bypass 122 connects the third battery connection plate 98A to the extension 70A. The electrical bypass 122 serves as another electrical pathway between the third battery connection plate 98A and the extension 70A thus decreasing the resistance in each pathway. The electrical bypass 122 causes the electrical pathways to have similar resistances. In some embodiments, the end strap 50A, 54A may have two electrical bypasses 122 to further reduce the resistance of the electrical pathway from the third battery connection plate 98A to the extension 70A.

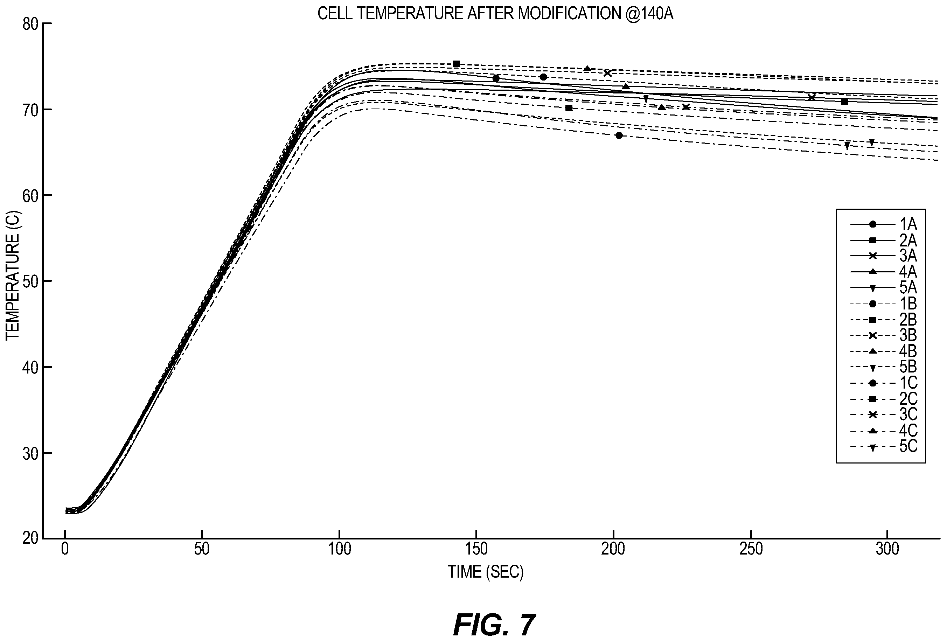

FIGS. 7 and 8B illustrate the temperature of the cells connected to the end strap 50A, 54A with the electrical bypass 122. The cells 1A and 5A have a temperature that is closer to the temperature of the remaining cells. When the electrical pathways from the battery connection plates to the current collection tab have similar resistances, the temperature difference between the cells is minimized.

With reference to FIGS. 9A and 9B, another embodiment of a negative end strap 1054 is shown. Many features of the negative end strap 1054 are similar to those discussed above with regard to the first embodiment of the negative end strap 54. As such, many of these features will not be discussed in detail below. Features similar to those discussed above will be labeled with a reference number that is a value of one thousand higher than the corresponding feature discussed above.

The negative end strap 1054 has a unitary strap body 1058 with a battery connection area 1126 and a current collection area 1130. The battery connection area 1126 includes a first battery connection plate 1090, a second battery connection plate 1094, and a third battery connection plate 1098. The current collection area 1130 includes an extension 1070 having a current collection tab 1078. The strap body 1058 has a bent shape such that the battery connection area 1126 lies on one plane, while the current collection area 1130 lies on a second plane. In the illustrated embodiment, the battery connection area 1126 is perpendicular to the current collection area 1130.

The negative end strap 1054 has a first electrical pathway 1110 that extends between the first battery connection plate 1090 and the current collection tab 1078, a second electrical pathway 1114 that extends between the second battery connection plate 1094 and the current collection tab 1078, and a third electrical pathway 1118 that extends between the third battery connection plate 1098 and the current collection tab 1078.

The first battery connection plate 1090 is a first length away from the current collection tab 1078. The second battery connection plate 1094 is a second length away from the current collection tab 1078. The third battery connection plate 1098 is a third length away from the current collection tab 1078. The second and third lengths are within 10% of the first length. In some embodiments, the battery connection plates 1090, 1094, 1098 are equidistant from the current collection tab 1078 such that the electrical pathways 1110, 1114, 1118 have similar resistances.

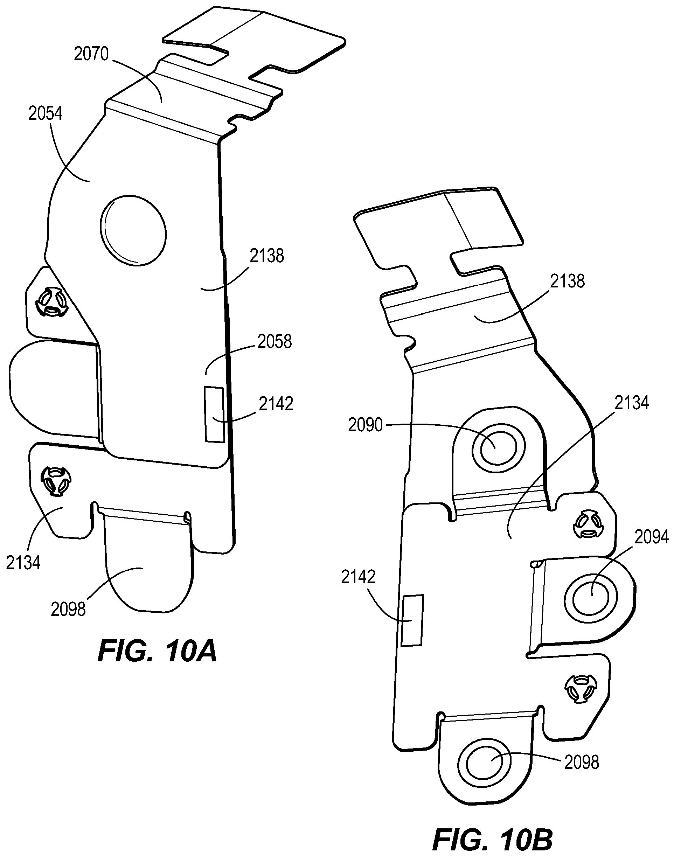

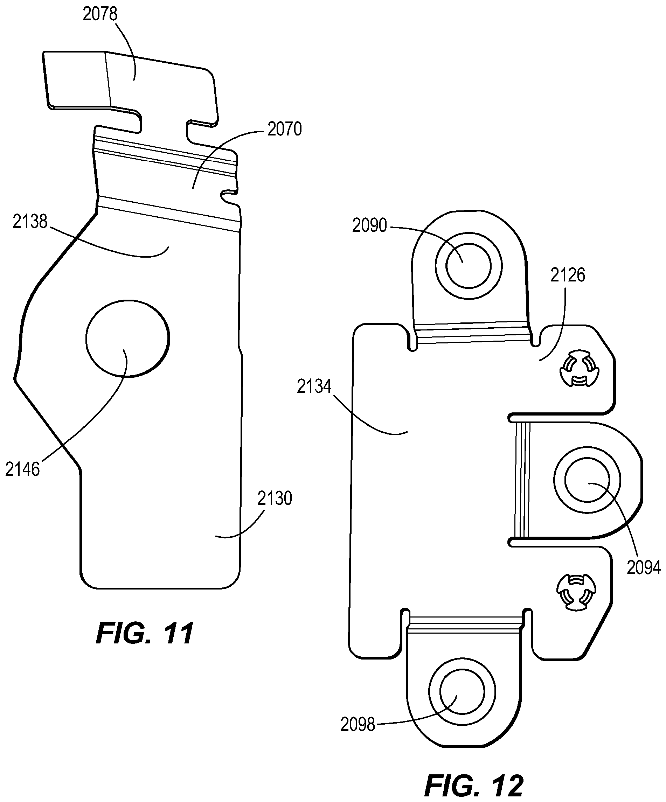

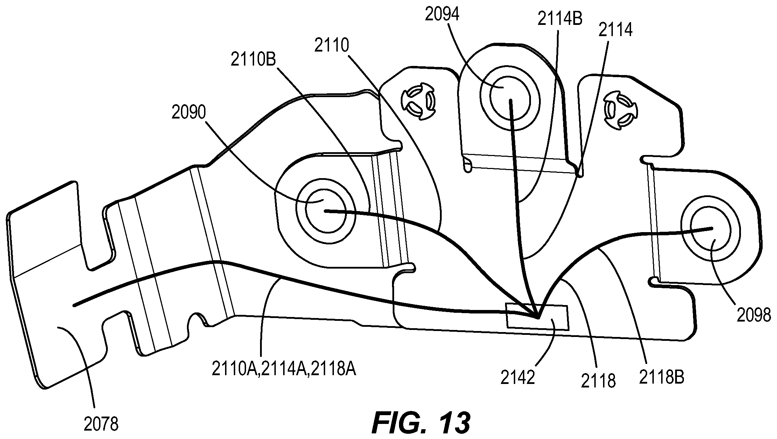

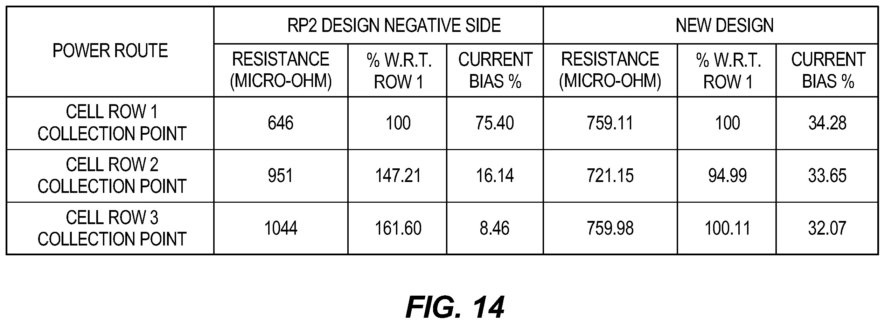

With reference to FIGS. 10A-14, another embodiment of a negative end strap 2054 is shown. Many features of the negative end strap 2054 are similar to those discussed above with regard to the first embodiment of the negative end strap 54. As such, many of these features will not be discussed in detail below. Features similar to those discussed above will be labeled with a reference number that is a value of two thousand higher than the corresponding feature discussed above.

The negative end strap 2054 includes a strap body 2058 having an inner strap 2134 and an outer strap 2138. The inner strap 2134 is connected to the outer strap 2138 by a weld 2142. The inner strap 2134 is electrically connected to the outer strap 2138 only at the weld 2142. The inner strap 2134 is adjacent the cell assembly 18. The inner strap 2134 defines a battery connection area 2126 and the outer strap defines a current collection area 2130.

The inner strap 2134 includes a first battery connection plate 2090, a second battery connection plate 2094, and a third battery connection plate 2098. The first battery connection plate 2090 is electrically connected to the battery cell closest to the current collection tab 2078 (e.g., battery cell 5A). The second battery connection plate 2094 is electrically connected to the middle battery cell (e.g., battery cell 5B). The third battery connection plate 2098 is electrically connected to the battery cell that is furthest from the current collection tab 2078 (e.g., battery cell 5C).

The first battery connection plate 2090 is a first length away from the weld 2142. The second battery connection plate 2094 is a second length away from the weld 2142. The third battery connection plate 2098 is a third length away from the weld 2142. The second and third lengths are within 10% of the first length. In some embodiments, the battery connection plates 2090, 2094, 2098 are equidistant from the weld 2142.

The outer strap 2138 includes an extension 2070 having a current collection tab 2078 and a cutout portion 2146. In the illustrated embodiment, the cutout portion 2146 is aligned with the first battery connection plate 2090. The cutout portion 2146 decreases the amount of material in the outer strap 2138. The outer strap 2138 extends along the inner strap 2134 to an area that is adjacent the second battery connection plate 2094.

The negative end strap 2054 has a first electrical pathway 2110 that extends between the first battery connection plate 2090 and the current collection tab 2078, a second electrical pathway 2114 that extends between the second battery connection plate 2094 and the current collection tab 2078, and a third electrical pathway 2118 that extends between the third battery connection plate 2098 and the current collection tab 2078.

The first electrical pathway 2110 includes a first path portion 2110A and a second path portion 2110B that connect at the weld 2142. The first path portion 2110A extends between the current collection tab 2078 and an area past the first battery connection plate 2090. More specifically, the first path portion 2110A extends between the current collection tab 2078 and the weld 2142. The second path portion 2110B extends between the area past the first battery connection plate 2090 and the first battery connection plate 2090. More specifically, the second path portion 2110B extends between the weld 2142 and the first battery connection plate 2090.

The second electrical pathway 2114 includes a first path portion 2114A and a second path portion 2114B that connect at the weld 2142. The first path portion 2114A may be the same as the first path portion 2110A of the first electrical pathway 2110. The second path portion 2114B may extend between the weld 2142 and the second battery connection plate 2094.

The third electrical pathway 2118 includes a first path portion 2118A and a second path portion 2118B that connect at the weld 2142. The first path portion 2118A may be the same as the first path portion 2110A of the first electrical pathway 2110. The second path portion 2118B may continue to extend between the weld 2142 to the third battery connection plate 2098.

The first electrical pathway 2110 has a first length. The second electrical pathway 2114 has a second length. The third electrical pathway 2118 has a third length. The second and third lengths are within 10% of the first length. In some embodiments, the second and third lengths are within 5% of the first length. In some embodiments the third length is within 1% of the first length.

Each electrical pathway 2110, 2114, 2118 has its own pathway resistance value. The first electrical pathway 2110 has a first resistance of 759.11 micro-ohms. The second electrical pathway 2114 has a second resistance of 721.15 micro-ohms. The third electrical pathway 2118 has a third resistance of 759.98 micro-ohms. The first resistance has a current bias of 34%; the second resistance has a current bias of 33%; and the third resistance has a current bias of 32%. The largest pathway resistance (e.g., the third resistance) is less than 110% of the smallest pathway resistance (e.g., the second resistance). The largest pathway resistance is less than 106% of the smallest pathway resistance. The largest resistance may be within 105 % of the smallest pathway resistance. The largest resistance may be within 103% of the smallest pathway resistance. The largest resistance may be within 101% of the smallest pathway resistance. The largest resistance may be no more than 100% of the smallest resistance.

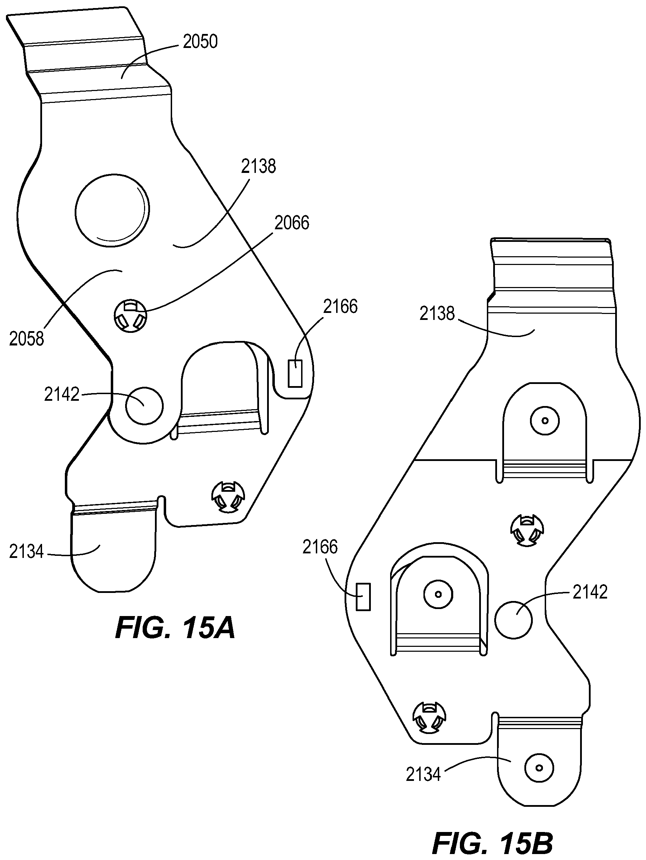

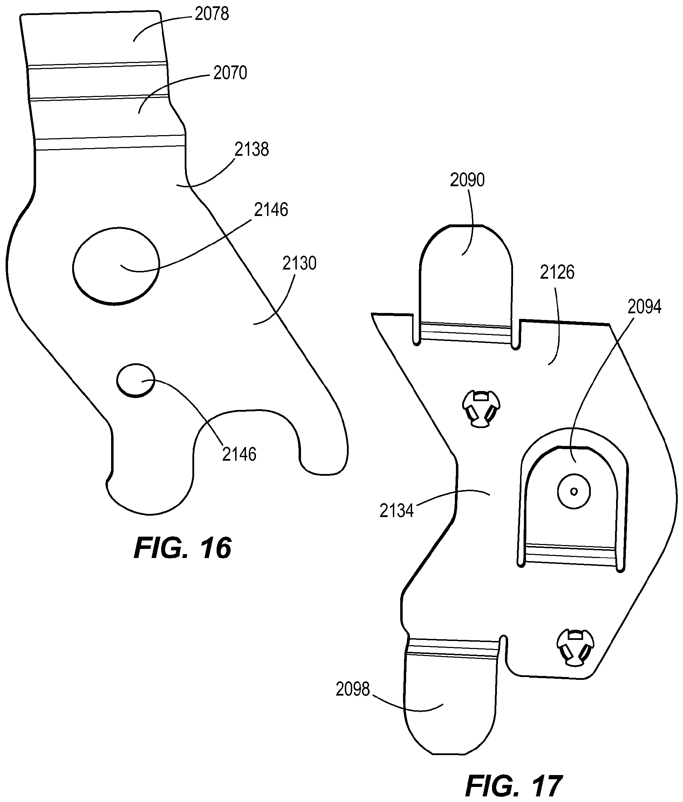

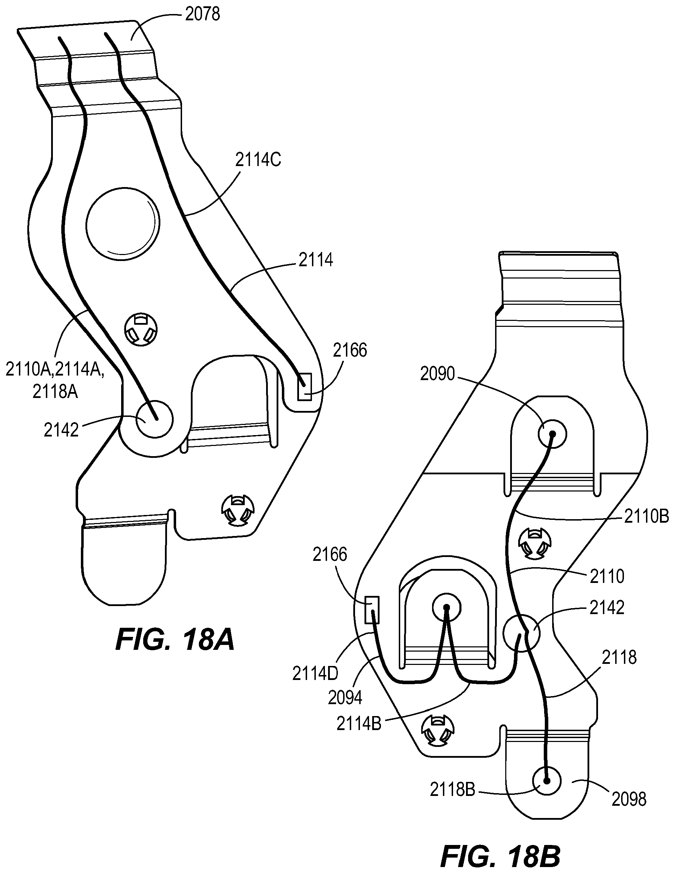

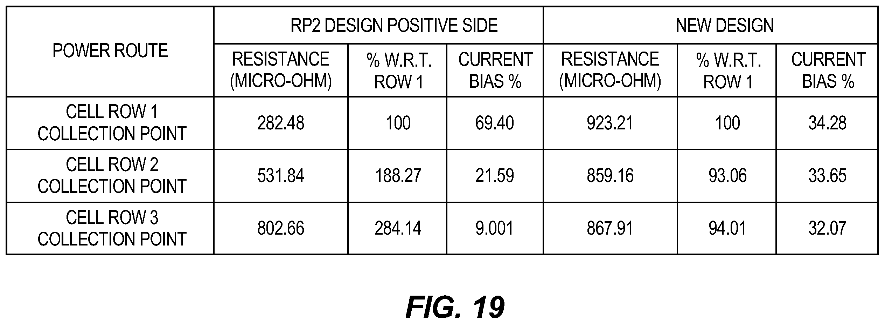

With reference to FIGS. 15A-19, another embodiment of a positive end strap 2050 is shown. Many features of the positive end strap 2050 are similar to those discussed above with regard to the first embodiment of the positive end strap 50. As such, many of these features will not be discussed in detail below. Features similar to those discussed above will be labeled with a reference number that is a value of two thousand higher than the corresponding feature discussed above.

The positive end strap 2050 includes a strap body 2058 having an inner strap 2134 and an outer strap 2138. The inner strap 2134 is electrically connected to the outer strap 2138 by a first weld 2142 and a second weld 2166. The inner strap 2134 is adjacent the cell assembly 18. The inner strap 2134 defines a battery connection area 2126 and the outer strap defines a current collection area 2130. In the illustrated embodiment, the first weld 2142 has a generally circular shape and the second weld 2166 is smaller and is generally rectangular in shape. In other embodiments, the first weld 2142 may be smaller or the same size as the second weld 2166. In other embodiments, the first and second welds 2142, 2166 may have other shapes (e.g., square, diamond, oval, etc.). In other embodiments, the first weld 2142 and the second weld 2166 may have the same shape.

The inner strap 2134 includes a first battery connection plate 2090 (e.g., the closest battery connection plate), a second battery connection plate 2094 (e.g., the middle battery connection plate), and a third battery connection plate 2098 (e.g., the furthest battery connection plate). The first battery connection plate 2090 and the second battery connection plate 2094 are positioned such that they extend toward an extension 2070, while the third battery connection plate 2098 is positioned such that it extends away from the extension 2070. The first weld 2142 is located adjacent the second battery connection plate 2094 between the first battery connection plate 2090 and the second battery connection plate 2094. The second weld 2166 is located on the other side of the second battery connection plate 2094.

The outer strap 2138 includes the extension 2070 having a current collection tab 2078 and a plurality of cutout portions 2146. The extension 2070 is opposite the third battery connection plate 2098. In the illustrated embodiment, one of the plurality of cutout portions 2146 is aligned with the first battery connection plate 2090 and another one of the plurality of cutout portions 2146 is aligned with a mounting hole 2066 such that a mounting pin can extend through the outer strap 2138 and the inner strap 2134. The plurality of cutout portions 2146 decreases the amount of material in the outer strap 2138. The outer strap 2138 extends along the inner strap 2134 to the second battery connection plate 2094.

The positive end strap 2050 has a first electrical pathway 2110 that extends between the first battery connection plate 2090 and the current collection tab 2078, a second electrical pathway 2114 that extends between the second battery connection plate 2094 and the current collection tab 2078, and a third electrical pathway 2118 that extends between the third battery connection plate 2098 and the current collection tab 2078.

The first electrical pathway 2110 includes a first path portion 2110A and a second path portion 2110B that connect at the weld 2142. The first path portion 2110A extends between the current collection tab 2078 and the weld 2142. The second path portion 2110B extends between the weld 2142 and the first battery connection plate 2090.

The second electrical pathway 2114 includes a left path having a first path portion 2114A and a second path portion 2114B and a right path having a first path portion 2114C and a second path portion 2114D. The first path portion 2114A and a second path portion 2114B connect at the first weld 2142, while the first path portion 2114C and the second path portion 2114D connect at the second weld 2166. The first path portion 2114A extends between the current collection tab 2078 and the first weld 2142, and the first path portion 2114C extends between the current collection tab 2078 and the second weld 2166. The first path portion 2114A of the left path may be the same as the first path portion 2110A of the first electrical pathway 2110. The first path portion 2114C of the right path may be on the opposite side of the second battery connection plate 2094. The second path portion 2114B may extend between the first weld 2142 and the second battery connection plate 2094, while the second path portion 2114D may extend between the second weld 2166 and the second battery connection plate 2094.

The third electrical pathway 2118 includes a first path portion 2118A and a second path portion 2118B that connect at the weld 2142. The first path portion 2118A may be the same as the first path portion 2110A of the first electrical pathway 2110. The second path portion 2118B may continue to extend between the weld 2142 to the third battery connection plate 2098.

The first electrical pathway 2110 has a first length. The second electrical pathway 2114 has a second length. The third electrical pathway 2118 has a third length. The third length is within 10% of the first length. In some embodiments, the third length is within 5% of the first length. In some embodiments the third length is within 1% of the first length.

Each electrical pathway 2110, 2114, 2118 has its own pathway resistance value. The first electrical pathway 2110 has a first resistance of 923.21 micro-ohms. The second electrical pathway 2114 has a second resistance of 859.16 micro-ohms. The third electrical pathway 2118 has a third resistance of 867.91 micro-ohms. The first resistance has a current bias of 34%; the second resistance has a current bias of 33%; and the third resistance has a current bias of 32%. The largest pathway resistance (e.g., the first resistance) is less than 140% of the smallest pathway resistance (e.g., the second resistance). The largest pathway resistance is less than 110% of the smallest pathway resistance. More specifically, the largest resistance may be within 107% of the smallest pathway resistance.

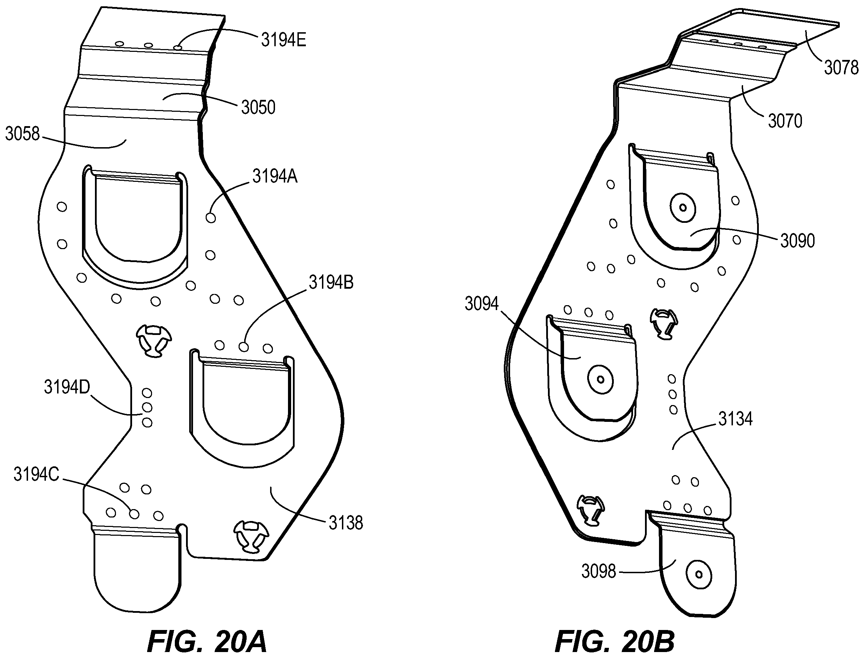

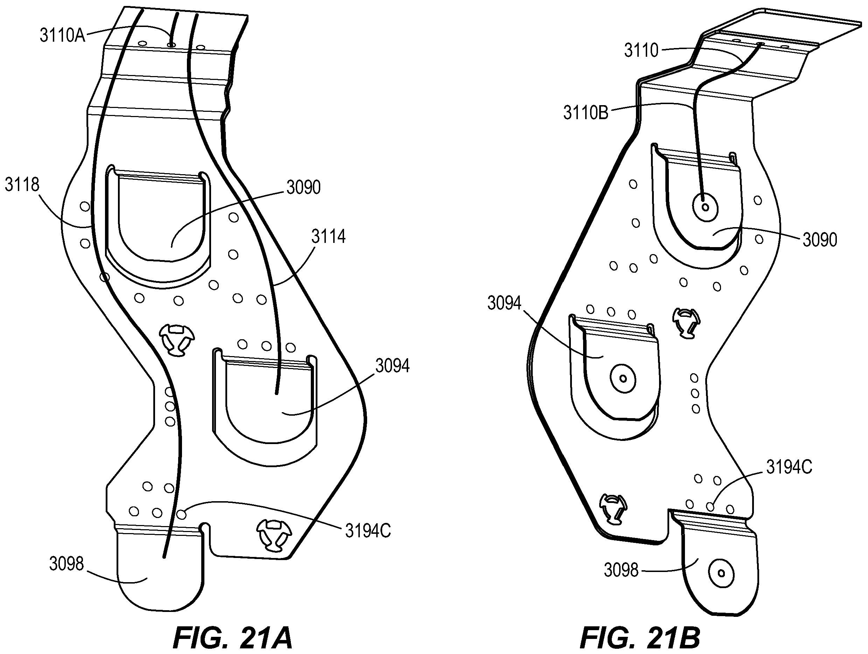

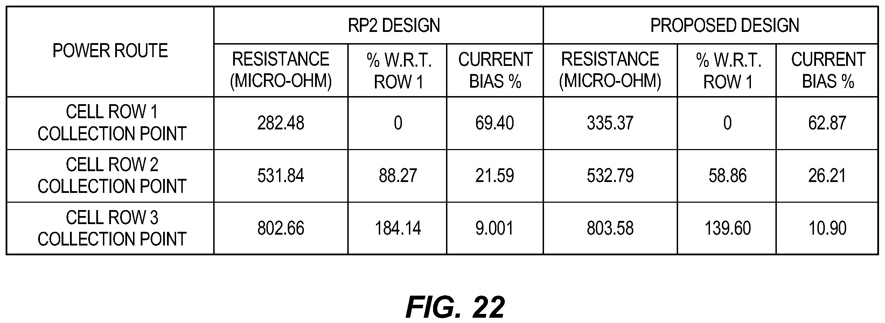

With reference to FIGS. 20A-23, another embodiment of a positive end strap 3050 is shown. Many features of the positive end strap 3050 are similar to those discussed above with regard to the second embodiment of the positive end strap 2050. As such, many of these features will not be discussed in detail below. Features similar to those discussed above will be labeled with a reference number that is a value of one thousand higher than the corresponding feature discussed above.

The positive end strap 3050 includes a strap body 3058. The strap body 3058 has an inner strap 3134 and an outer strap 3138. The inner strap 3134 includes a first battery connection plate 3090, while the outer strap 3138 includes a second battery connection plate 3094, a third battery connection plate 3098, and an extension 3070 having a current collection tab 3078. The inner strap 3134 extends between an area adjacent the third battery connection plate 3098 and the current collection tab 3078. The extension 3070 may be a stepped surface. The inner strap 3134 may be thicker than the outer strap 3138.

The inner strap 3134 is connected to the outer strap 3138 by a plurality of welds. The plurality of welds includes a first set of welds 3194A partially surrounding the first battery connection plate 3090, a second set of welds 3194B adjacent the second battery connection plate 3094, a third set of welds 3194C adjacent the third battery connection plate 3098, a fourth set of welds 3194D between the second battery connection plate 3094 and the third battery connection plate 3098, and a fifth set of welds 3194E located on the extension 3070. The inner strap 3134 may be electrically connected to the outer strap 3138 at only the weld locations 3194A-3194E.

The positive end strap 3050 has a first electrical pathway 3110 that extends between the first battery connection plate 3090 and the current collection tab 3078, a second electrical pathway 3114 that extends between the second battery connection plate 3094 and the current collection tab 3078, and a third electrical pathway 3118 that extends between the third battery connection plate 3098 and the current collection tab 3078.

The first electrical pathway 3110 includes a first path portion 3110A that extends along the outer weld 3138 and a second path portion 3110B that extends along the inner strap 3134. The first path portion 3110A of the first electrical pathway 3110 extends between the current collection tab 3078 and the fifth set of welds 3194E. The second path portion 3110B of the first electrical pathway 3110 extends between the fifth set of welds 3194E and the first battery connection plate 3090.

The second electrical path 3114 extends along the outer strap 3138. The third electrical path 3118 extends along the outer strap 3138.

The first electrical pathway 3110 has a first length. The second electrical pathway 3114 has a second length. The third electrical pathway 3118 has a third length. The first electrical pathway 3110 may be longer than the first and second electrical pathways.

Each electrical pathway 3110, 3114, 3118 has its own pathway resistance value. The first electrical pathway 3110 has a first resistance of 335.37 micro-ohms. The second electrical pathway 3114 has a second resistance of 532.79 micro-ohms. The third electrical pathway 3118 has a third resistance of 803.58 micro-ohms. The first resistance has a current bias of 62.87%; the second resistance has a current bias of 26.21%; and the third resistance has a current bias of 10.9%. The largest pathway resistance (e.g., the third resistance) is less than 240% of the smallest pathway resistance (e.g., the first resistance).

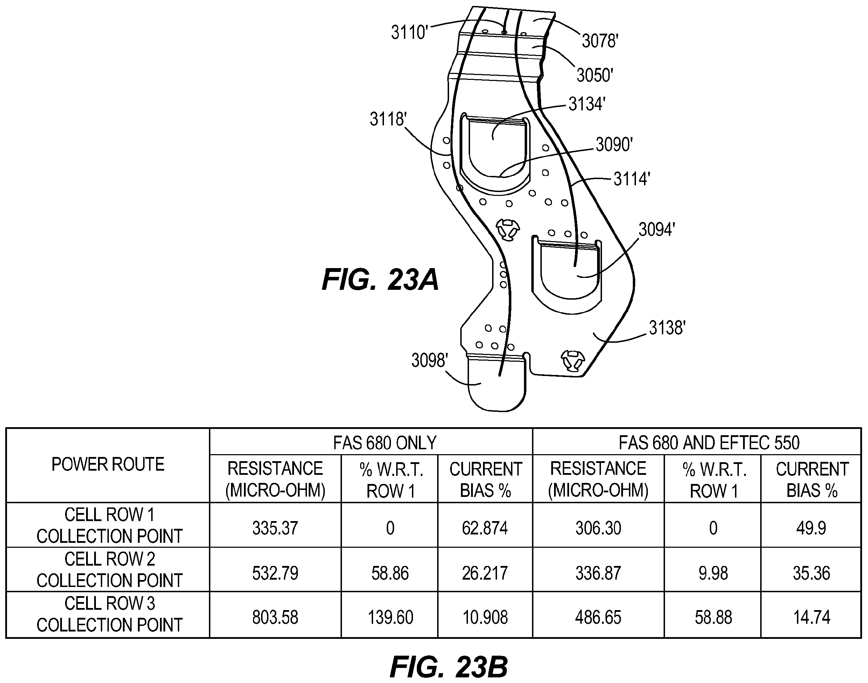

FIGS. 23A and 23B compare the resistance values of an end strap 3050' having an inner strap 3134' that is formed from a first material and an outer strap 3138' that is formed from a second, different material and the resistance values of the positive end strap 3050. The two-material end strap 3050' has a similar shape as the positive end strap 3050. The two-material end strap 3050' has lower resistances than the positive end strap 3050. The first material may be a material with a high resistance such as FAS 680, and the second material may be a material with a low resistance such as EFTEC 550. The two-material end strap 3050' has a has a first electrical pathway 3110' that extends between the first battery connection plate 3090' and the current collection tab 3078', a second electrical pathway 3114' that extends between the second battery connection plate 3094' and the current collection tab 3078', and a third electrical pathway 3118' that extends between the third battery connection plate 3098' and the current collection tab 3078'. The first electrical pathway 3110' has a first resistance of 306.3 micro-ohms. The second electrical pathway 3114' has a second resistance of 336.87 micro-ohms. The third electrical pathway 3118' has a third resistance of 486.65 micro-ohms. The first resistance has a current bias of 49.9%; the second resistance has a current bias of 35.36%; and the third resistance has a current bias of 14.74%. The largest pathway resistance (e.g., the third resistance) is less than 160% of the smallest pathway resistance (e.g., the first resistance). More specifically, largest pathway resistance is less than 158% of the smallest pathway resistance.

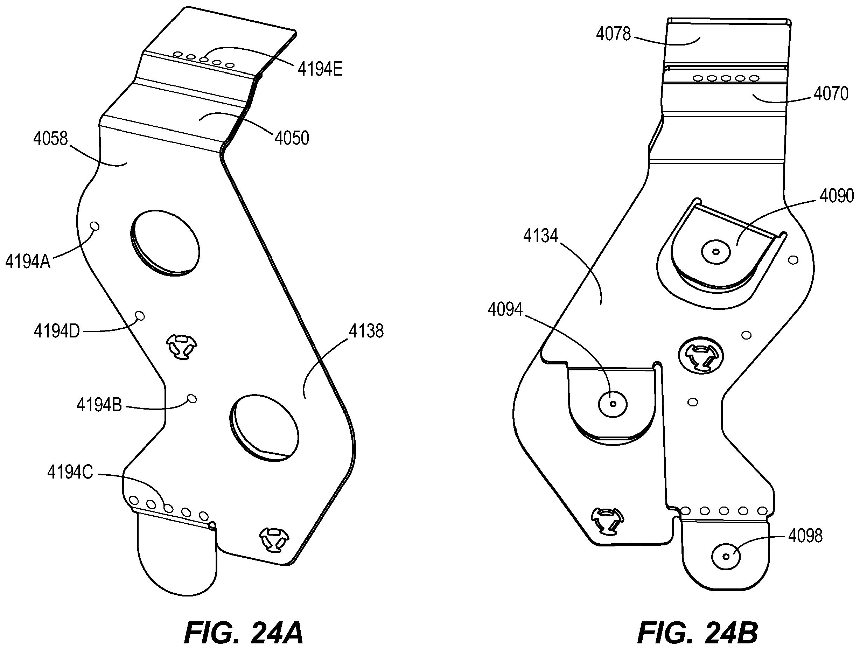

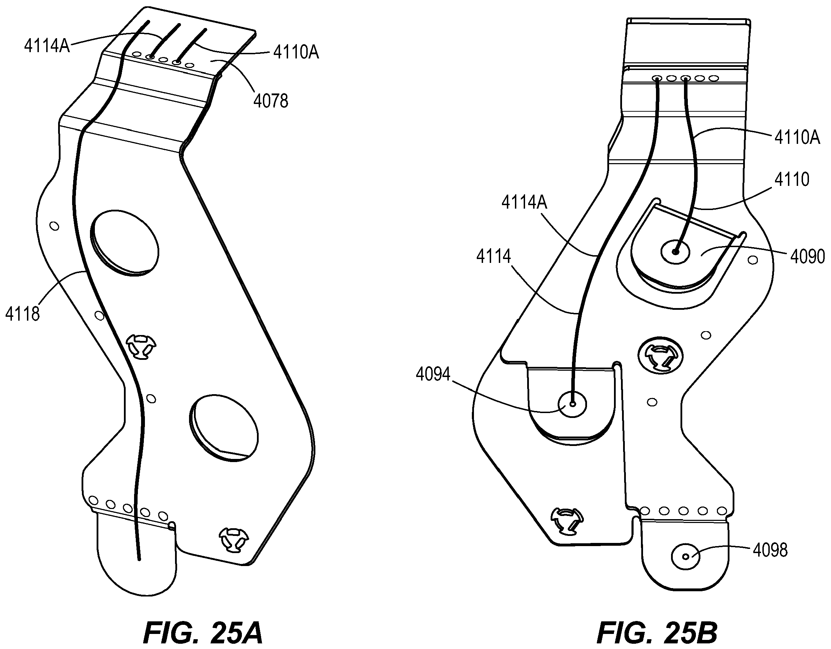

With reference to FIGS. 24A-25B, another embodiment of a positive end strap 4050 is shown. Many features of the positive end strap 4050 are similar to those discussed above with regard to the third embodiment of the positive end strap 3050. As such, many of these features will not be discussed in detail below. Features similar to those discussed above will be labeled with a reference number that is a value of one thousand higher than the corresponding feature discussed above.

The positive end strap 4050 includes a strap body 4058. The strap body 4058 has an inner strap 4134 and an outer strap 4138. The inner strap 4134 includes a first battery connection plate 4090 and a second battery connection plate 4094, while the outer strap 4138 includes a third battery connection plate 4098 and an extension 4070 having a current collection tab 4078. The inner strap 4134 extends between an area adjacent the third battery connection plate 4098 and the current collection tab 4078. The inner strap 4134 may be thicker than or the same thickness as the outer strap 4138.

The inner strap 4134 is connected to the outer strap 4138 by a plurality of welds. The plurality of welds includes a first set of welds 4194A adjacent the first battery connection plate 4090, a second set of welds 4194B adjacent the second battery connection plate 4094, a third set of welds 4194C adjacent the third battery connection plate 4098, a fourth set of welds 4194D between the first battery connection plate 4090 and the second battery connection plate 4094, and a fifth set of welds 4194E located on the extension 4070. The inner strap 4134 may be electrically connected to the outer strap 4138 at the weld locations 4194A-4194E. The first, second, and fourth set of welds 4194A, 4149B, 4194D may only include one weld.

The positive end strap 4050 has a first electrical pathway 4110 that extends between the first battery connection plate 4090 and the current collection tab 4078, a second electrical pathway 4114 that extends between the second battery connection plate 4094 and the current collection tab 4078, and a third electrical pathway 4118 that extends between the third battery connection plate 4098 and the current collection tab 4078. Although not shown in the figures, the positive end strap 4050 may have more electrical pathways between the inner strap 4134 and the outer strap 4138 that extend through the weld points 4194A-4194E.

The first electrical pathway 4110 includes a first path portion 4110A that extends along the outer strap 4138 and a second path portion 4110B that extends along the inner strap 4134. The first path portion 4110A of the first electrical pathway 4110 extends between the current collection tab 4078 and the fifth set of welds 4194E. The second path portion 4110B of the first electrical pathway 4110 extends between the fifth set of welds 4194E and the first battery connection plate 4090.

The second electrical pathway 4114 includes a first path portion 4114A that extends along the outer strap 4138 and a second path portion 4114B that extends along the inner strap 4134. The first path portion 4114A of the second electrical pathway 4114 extends between the current collection tab 4078 and the fifth set of welds 4194E. The second path portion 4114B of the second electrical pathway 4114 extends between the fifth set of welds 4194E and the second battery connection plate 4094.

Unlike the first and second electrical pathways 4110, 4114 that extend along the outer strap 4138 and the inner strap 4134, the third electrical pathway 4118 only extends along the outer strap 4138.

The strap body 4058 may be shaped such that the cross-sectional area between the second battery connection plate 4094 and the current collection tab 4078 is increased. The larger cross-sectional area decreases the resistance in the second electrical pathway 4114 and the resistance in the third electrical pathway 4118. Additionally, the outer strap 4138 may have fewer cutouts compared to other embodiments of the positive end strap (e.g., positive end strap 2050) to decrease the resistance in the in the outer strap 4138.

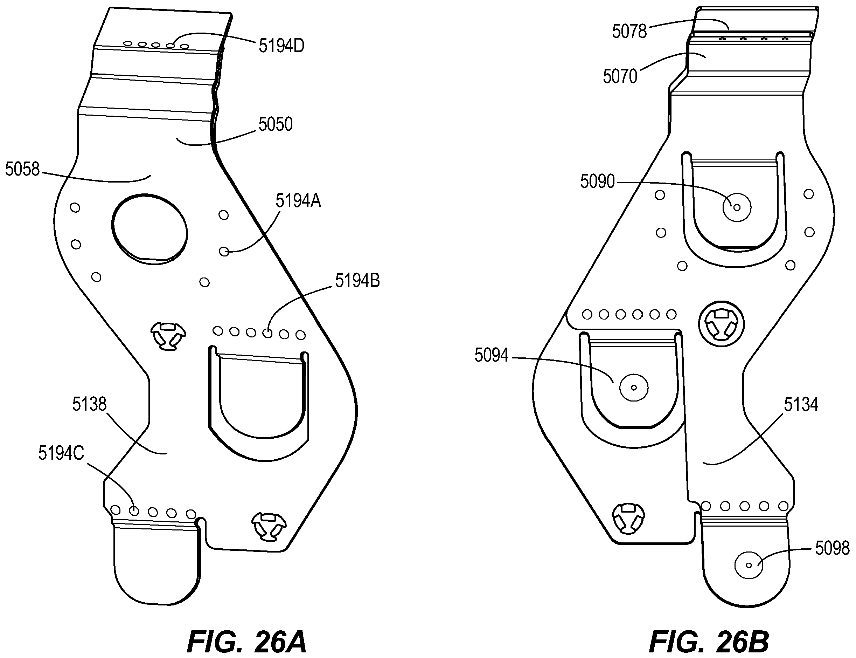

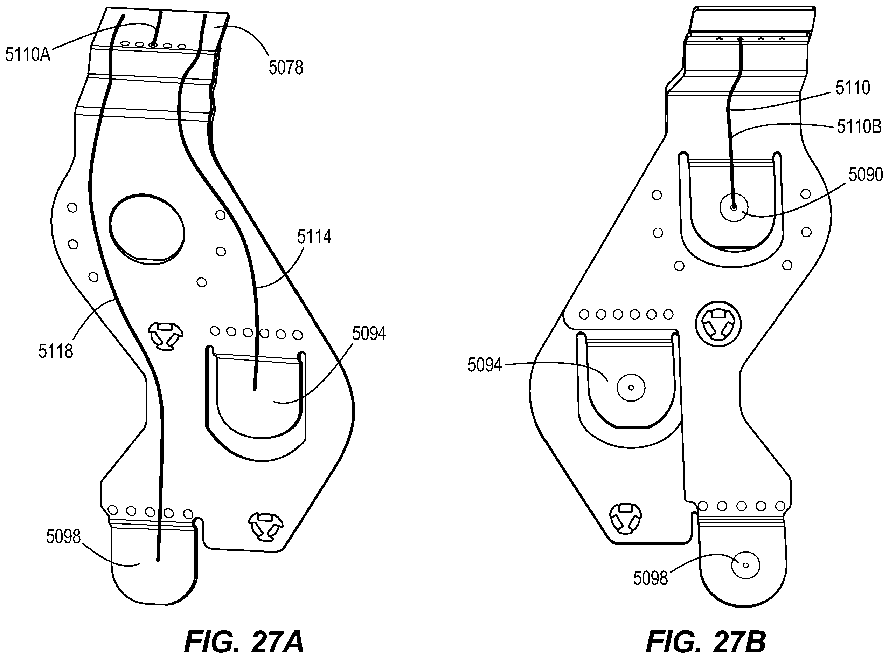

With reference to FIGS. 26A-27A, another embodiment of a positive end strap 5050 is shown. Many features of the positive end strap 5050 are similar to those discussed above with regard to the third embodiment of the positive end strap 3050. As such, many of these features will not be discussed in detail below. Features similar to those discussed above will be labeled with a reference number that is a value of two thousand higher than the corresponding feature discussed above.

The positive end strap 5050 includes a strap body 5058. The strap body 5058 has an inner strap 5134 and an outer strap 5138. The inner strap 5134 includes a first battery connection plate 5090, while the outer strap 5138 includes a second battery connection plate 5094, a third battery connection plate 5098, and an extension 5070 having a current collection tab 5078. The inner strap 5134 has a first leg that extends between an area adjacent the third battery connection plate 5098 and the current collection tab 5078 and a second leg that extends between an area adjacent the second battery connection plate 5094 and the current collection tab 5078. The extension 5070 may include a stepped surface.

The inner strap 5134 is connected to the outer strap 5138 by a plurality of welds. The plurality of welds includes a first set of welds 5194A that partially surround the first battery connection plate 5090, a second set of welds 5194B adjacent the second battery connection plate 5094, a third set of welds 5194C adjacent the third battery connection plate 5098, and a fourth set of welds 5194D located on the extension 5070. The inner strap 5134 may be electrically connected to the outer strap 5138 at only the weld locations 5194A-5194D.

The positive end strap 5050 has a of first electrical pathway 5110 that extends between the first battery connection plate 5090 and the current collection tab 5078, a second electrical pathway 5114 that extends between the second battery connection plate 5094 and the current collection tab 5078, and a third electrical pathway 5118 that extends between the third battery connection plate 5098 and the current collection tab 5078.

The first electrical pathway 5110 includes a first path portion 5110A that extends along the outer strap 5138, and a second path portion 5110B that extends along the inner strap 5134. The first path portion 5110A of the first electrical pathway 5110 extends between the current collection tab 5078 and the fourth set of welds 5194D. The second path portion 5110B of the first electrical pathway 5110 extends between the fourth set of welds 5194D and the first battery connection plate 5090.

The second electrical path 5114 extends along the outer strap 5138. The third electrical path 5118 extends along the outer strap 5138.

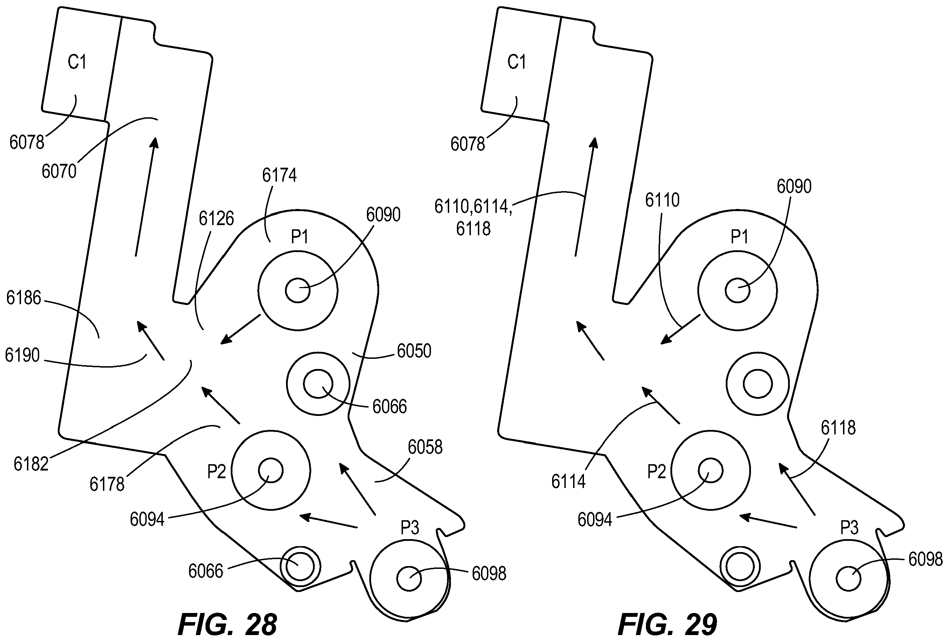

With reference to FIGS. 28-29, another embodiment of a positive end strap 6050 is shown. Many features of the positive end strap 6050 are similar to those discussed above with regard to the first embodiment of the positive end strap 1050. As such, many of these features will not be discussed in detail below. Features similar to those discussed above will be labeled with a reference number that is a value of five thousand higher than the corresponding feature discussed above.

The positive end strap 6050 includes a strap body 6058. The strap body 6058 includes a battery connection portion 6126 and a current connection portion 6130. The strap body 6058 is one unitary body.

The battery connection portion 6126 includes a first lobe 6174 and a second lobe 6178. The first lobe 6174 includes a first battery connection plate 6090, while the second lobe 6178 includes at least a second battery connection plate 6094 or a third battery connection plate 6098. In the illustrated embodiment, the second lobe includes the second battery connection plate 6094 and the third battery connection plate 6098. The first lobe 6174 is connected to the second lobe 6178 at a lobe connection area 6182. The lobe connection area 6182 is between the first battery connection plate 6090 and the second battery connection plate 6094. The first battery connection plate 6090 is a first distance from the current connection portion 6130. The second battery connection plate 6094 is positioned a second distance from the current connection portion 6130. The third battery connection plate 6098 is a third distance from the current connection portion 6130. The first distance may be the same length or longer than the second distance. The first distance is longer than the third distance.

The current connection portion 6130 includes an extension 6070 and the current collection tab 6078. The extension 6070 has a generally elongated shape. The current collection tab 6078 is on one end of the of the current connection portion 6130.

The battery connection portion 6126 and the current connection portion 6130 are connected to each other at a connection area 6190. The connection area 6190 is adjacent the lobe connection area 6182. The connection area 6190 is opposite the current collection tab 6078 on the current connection portion 6130.

The positive end strap 6050 has a first electrical pathway 6110 that extends between the first battery connection plate 6090 and the current collection tab 6078, a second electrical pathway 6114 that extends between the second battery connection plate 6094 and the current collection tab 6078, and a third electrical pathway 6118 that extends between the third battery connection plate 6098 and the current collection tab 6078. The third electrical pathway 6118 includes a first path that extends along one side of the second battery connection plate 6094 and a second path that extends along the other side of the second battery connection plate 6094. The electrical pathways 6110, 6114, 6118 may each have a voltage that is within 5% of each other.

The strap body 6058 may include multiple mounting tabs or mounting holes 6066. One of the mounting holes 6066 may be between the first lobe 6174 and the second lobe 6178. Another one of the mounting holes 6066 may be between the second battery connection plate 6094 and the third battery connection plate 6098.

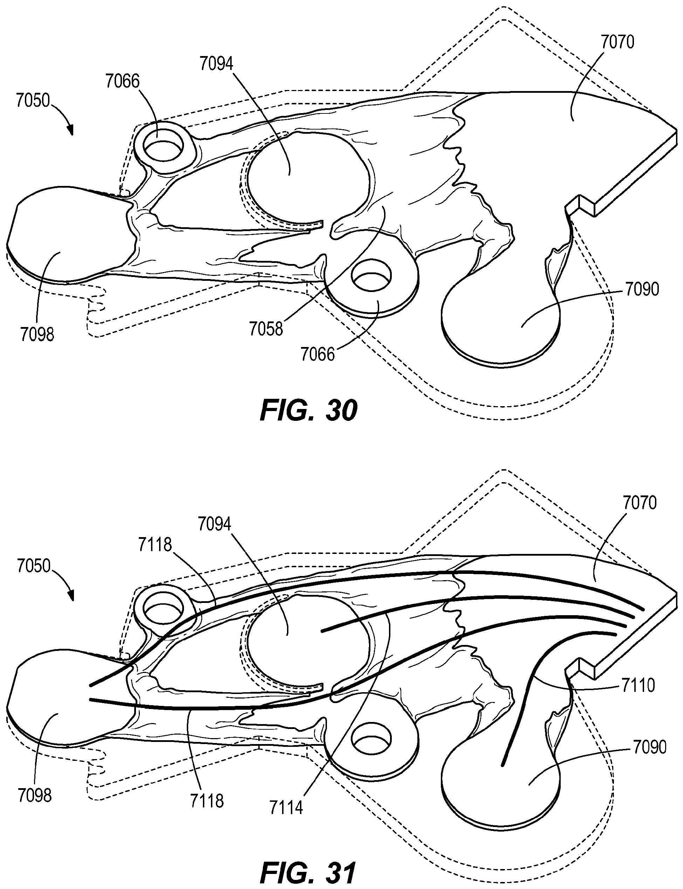

With reference to FIGS. 30-31, another embodiment of a positive end strap 7050 is shown. Many features of the positive end strap 7050 are similar to those discussed above with regard to the sixth embodiment of the positive end strap 6050. As such, many of these features will not be discussed in detail below. Features similar to those discussed above will be labeled with a reference number that is a value of one thousand higher than the corresponding feature discussed above.

The positive end strap 7050 includes a strap body 7058. The strap body 7058 includes a first battery connection plate 7090, a second battery connection plate 7094, a third battery connection plate 7098, an extension 7070 having a current collection tab (not shown), and mounting tabs or mounting holes 7066.

The positive end strap 7050 has a first electrical pathway 7110 that extends between the first battery connection plate 7090 and the extension 7070, a second electrical pathway 7114 that extends between the second battery connection plate 7094 and the extension 7070, and a third electrical pathway 7118 that extends between the third battery connection plate 7098 and the extension 7070. The third electrical pathway 7118 includes a first path that extends along one side of the second battery connection plate 7094 and a second path that extends along the other side of the second battery connection plate 7094.

The strap body 7058 is designed such that the resistance of the first electrical path 7110 is the same as the resistance of the second and third electrical paths 7114, 7118. More specifically, because the first battery connection plate 7090 and the second battery connection plate 7094 are closer to the extension 7070, the strap body 7058 is wider near the first and second battery connection plates 7090, 7094. Because the third battery connection plate 7098 is further from the extension 7070, the strap body 7058 is narrower near the third battery connection plate 7098.

Additionally, the strap body 7058 may be designed such that the least amount of material can be used. The strap body 7058 is similar to the strap body 6058, however extra material was removed to form the new strap body 7058. A topology optimization tool may be used to help balance the electrical pathways and show extra, unnecessary material in order to create the shape of the strap body 7058.

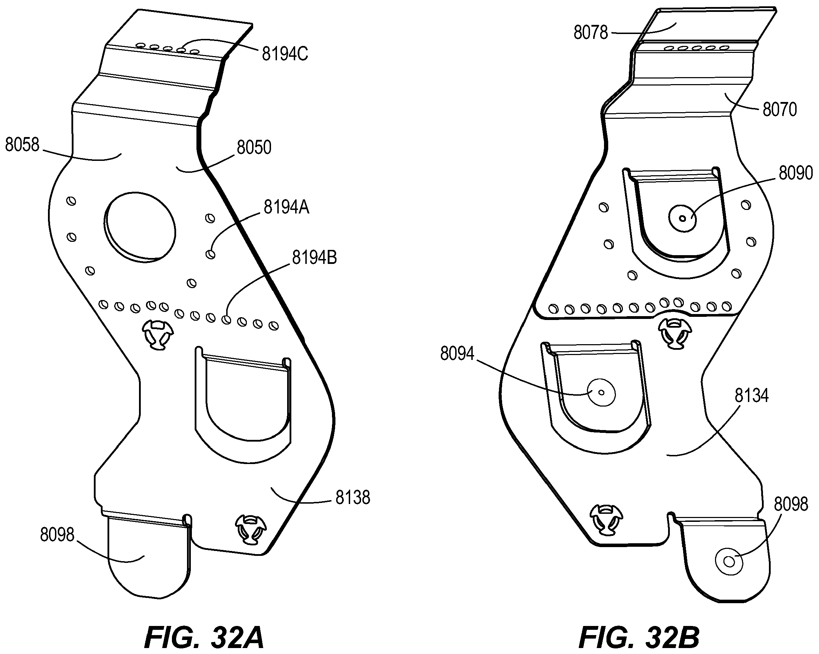

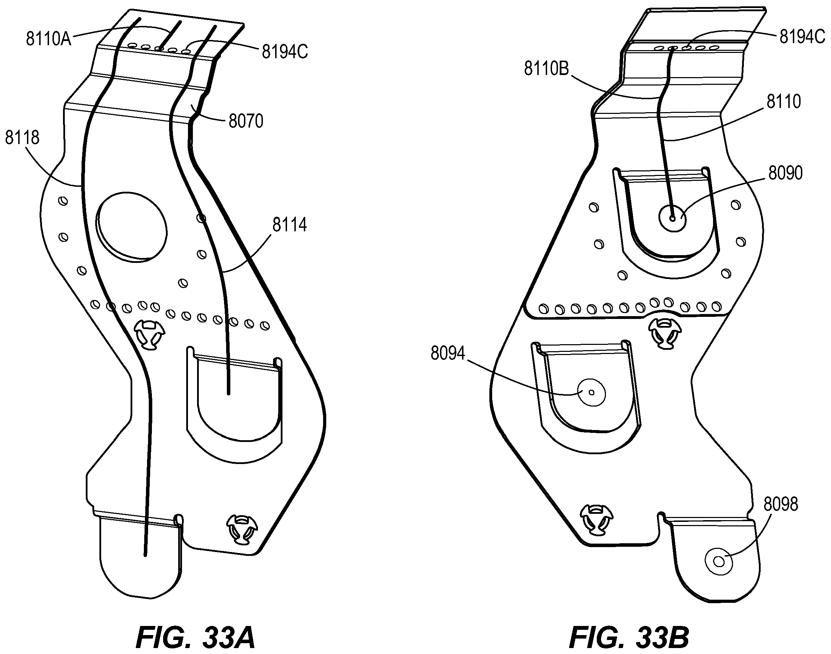

With reference to FIGS. 32A-33B, another embodiment of a positive end strap 8050 is shown. Many features of the positive end strap 8050 are similar to those discussed above with regard to the third embodiment of the positive end strap 3050. As such, many of these features will not be discussed in detail below. Features similar to those discussed above will be labeled with a reference number that is a value of five thousand higher than the corresponding feature discussed above.

The positive end strap 8050 includes a strap body 8058. The strap body 8058 has an inner strap 8134 and an outer strap 8138. The inner strap 8134 includes a first battery connection plate 8090, while the outer strap 8138 includes a second battery connection plate 4094 and a third battery connection plate 8098, and an extension 8070 having a current collection tab 8078. The inner strap 8134 extends from an area above the second battery connection plate 8094 to the extension 8070.

The inner strap 8134 is connected to the outer strap 8138 by a plurality of welds. The plurality of welds includes a first set of welds 8194A that partially surround the first battery connection plate 8090, a second set of welds 8194B between the second battery connection plate 8094 and the first battery connection plate 8090, and a third set of welds 8194C located on the current collection tab 8078. The inner strap 8134 may be electrically connected to the outer strap 8138 at the weld locations 8194A-8194B.

The positive end strap 8050 has a first electrical pathway 8110 that extends between the first battery connection plate 8090 and the current collection tab 8078, a second electrical pathway 8114 that extends between the second battery connection plate 8094 and the current collection tab 8078, and a third electrical pathway 8118 that extends between the third battery connection plate 8098 and the current collection tab 8078.

The first electrical pathway 8110 includes a first path portion 8110A that extends along the outer strap 8138, and a second path portion 8110B that extends along the inner strap 8134. The first path portion 8110A of the first electrical pathway 8110 extends between the current collection tab 8078 and the third set of welds 8194C. The second path portion 8110B of the first electrical pathway 8110 extends between the third set of welds 8194C and the first battery connection plate 8090.

The second electrical path 8114 extends along the outer strap 8138. The third electrical path 8118 extends along the outer strap 8138.

When used in this specification and claims, the terms "comprises" and "comprising" and variations thereof mean that the specified features, steps or integers are included. The terms are not to be interpreted to exclude the presence of other features, steps or components.

## Claims

1. A battery pack (10) comprising:
a positive pack terminal (22);
a negative pack terminal (26);
a cell assembly (18) having a plurality of battery cells (30);
a busbar strap (2054) having a current collection tab (2078) and a battery connection plate (2090), the battery connection plate (2090) electrically connected to a battery cell, of the plurality of battery cells (30), closest to the current collection tab (2078); and
an electrical pathway (2110) that extends between the current collection tab (2078) and the battery connection plate (2090), the electrical pathway (2110) includes a first path portion (2110A) that extends between the current collection tab (2078) and an area past the battery connection plate (2090) and a second path portion (2110B) that extends between the area past the battery connection plate (2090) and the battery connection plate (2090).

2. The battery pack of claim 1, wherein the busbar strap (2054) includes an inner strap (2134) and an outer strap (2138).

3. The battery pack of claim 2, wherein
the inner strap (2134) is electrically connected to the outer strap (2138) at a weld (2142), and
the first path portion (2110A) connects to the second path portion (2110B) at the weld (2142).

4. The battery pack of claim 2 or 3, wherein the inner strap (2134) is formed from a first material and the outer strap (2138) is formed from a second, different material.

5. The battery pack of any preceding claim, wherein the busbar strap (2054) is a unitary body.

6. The battery pack of any preceding claim, wherein
the busbar strap (2054) includes another battery connection plate (2098) that is electrically connected to a battery cell, of the plurality of battery cells (30), farthest from the current collection tab (2078), and
the battery pack further comprises another electrical pathway (2118) that extends between the current collection tab (2078) and the other battery connection plate (2098).

7. The battery pack of claim 6, wherein a resistance of the other electrical pathway (2118) is within 10% of a resistance of the electrical pathway (2110) or wherein a resistance of the other electrical pathway (2118) is within 5% of a resistance of the electrical pathway (2110).

8. The battery pack of claim 6 or 7, wherein
the busbar strap (2054) includes a middle battery connection plate (2094) that is electrically connected to a middle battery cell located between the battery cell closest to the current collection tab (2078) and the battery cell furthest from the current collection tab (2078), and
the battery pack further comprises a middle electrical pathway (2114) that extends between the current collection tab (2078) and the middle battery connection plate (2094), preferably wherein a resistance of the middle electrical pathway (2114) is within 10% of a resistance of the electrical pathway (2110).

9. A battery pack comprising:
a positive pack terminal (22);
a negative pack terminal (26);
a cell assembly (18) having a first battery cell, a second battery cell, and a third battery cell; and
a busbar strap (6050) having a battery connection area (6126) and an elongated extension (6070), the battery connection area (6126) having a lobe (6174) connected to the first battery cell and another lobe (6178) connected to the second and/or third battery cells, the lobe (6174) and the other lobe (6178) are connected at a lobe connection area (6182), the elongated extension (6070) is connected to the battery connection area (6126) adjacent to the lobe connection area (6182), wherein
the first battery cell is configured to define a first electrical pathway (6110) from the first battery cell to the elongated extension (6070), the first electrical pathway (6110) having a first electrical voltage,
the third battery cell is configured to define a third electrical pathway (6118) from the third battery cell to the elongated extension (6070), the third electrical pathway (6118) having a third electrical voltage, and
the third electrical voltage is within 5% of the first electrical voltage.

10. The battery pack of claim 9, wherein
the elongated extension (6070) has a current collection tab (6078), and
the current collection tab (6078) is configured to be electrically connected to one of the positive pack terminal (22) and the negative pack terminal (26).

11. The battery pack of claim 9 or 10, wherein
the first battery cell is a first distance from the elongated extension (6070),
the third battery cell is a third distance from the elongated extension (6070), and
the first distance is shorter than the third distance.

12. The battery pack of any one of claims 9 to 11, wherein the busbar strap (6050) has a mounting tab located between the lobe (6174) and the other lobe (6178).

13. A battery pack comprising:
a busbar strap (46, 50, 54) having a current collection tab (78) and a plurality of battery connection plates (62); and
a plurality of battery cells connected (30) to the busbar strap (46, 50, 54) at the plurality of battery connection plates (62),
wherein
each of the plurality of battery cells (30) is configured to transfer electricity through a respective battery connection plate (62), of the plurality of battery connection plates (62), and to the current collection tab (78) along a respective electrical pathway (110, 114, 118),
each respective electrical pathway has a pathway resistance, and
a largest pathway resistance is less than 170% of a smallest pathway resistance.

14. The battery pack of claim 13, wherein the largest pathway resistance is less than 140% of the smallest pathway resistance, preferably wherein the largest pathway resistance is less than 130% of the smallest pathway resistance, more preferably wherein the largest pathway resistance is less than 110% of the smallest pathway resistance, still more preferably wherein the largest pathway resistance is less than 106% of the smallest pathway resistance.

## Patentansprüche

1. Batteriepack (10), umfassend:
Einen positiven Packanschluss (22);
einen negativen Packanschluss (26);
eine Zellanordnung (18) mit einer Vielzahl von Batteriezellen (30);
ein Sammelschienenband (2054) mit einem Stromabnahmelasche (2078) und einer Batterieanschlussplatte (2090), wobei die Batterieanschlussplatte (2090) elektrisch mit einer Batteriezelle (30) aus der Vielzahl der Batteriezellen verbunden ist, die der Stromabnahmelasche (2078) am nächsten liegt; und
eine elektrische Leitbahn (2110), die sich zwischen der Stromabnahmelasche (2078) und der Batterieanschlussplatte (2090) erstreckt, wobei die elektrische Leitbahn (2110) einen ersten Bahnabschnitt (2110A), der sich zwischen der Stromabnahmelasche (2078) und einem Bereich hinter der Batterieanschlussplatte (2090) erstreckt, und einen zweiten Bahnabschnitt (2110B) umfasst, der sich zwischen dem Bereich hinter der Batterieanschlussplatte (2090) und der Batterieanschlussplatte (2090) erstreckt.

2. Batteriepack nach Anspruch 1, wobei das Sammelschienenband (2054) ein inneres Band (2134) und ein äußeres Band (2138) umfasst.

3. Batteriepack nach Anspruch 2, wobei
das innere Band (2134) an einer Schweißstelle (2142) elektrisch mit dem äußeren Band (2138) verbunden ist, und
sich der erste Bahnabschnitt (2110A) an der Schweißstelle (2142) mit dem zweiten Bahnabschnitt (2110B) verbindet.

4. Batteriepack nach Anspruch 2 oder 3, wobei das innere Band (2134) aus einem ersten Material und das äußere Band (2138) aus einem zweiten, anderen Material geformt ist.

5. Batteriepack nach irgendeinem vorhergehenden Anspruch, wobei das Sammelschienenband (2054) ein einteiliger Körper ist.

6. Batteriepack nach irgendeinem vorhergehenden Anspruch, wobei
das Sammelschienenband (2054) eine weitere Batterieanschlussplatte (2098) umfasst, die elektrisch mit einer der Vielzahl von Batteriezellen (30) verbunden ist, die am weitesten von der Stromabnahmelasche (2078) entfernt ist, und
der Batteriepack außerdem eine weitere elektrische Leitbahn (2118) umfasst, die sich zwischen der Stromabnahmelasche (2078) und der anderen Batterieanschlussplatte (2098) erstreckt.

7. Batteriepack nach Anspruch 6, wobei der Widerstand der anderen elektrischen Leitbahn (2118) innerhalb von 10 % des Widerstands der elektrischen Leitbahn (2110) liegt oder wobei der Widerstand der anderen elektrischen Leitbahn (2118) innerhalb von 5 % des Widerstands der elektrischen Leitbahn (2110) liegt.

8. Batteriepack nach Anspruch 6 oder 7, wobei
das Sammelschienenband (2054) eine mittlere Batterieanschlussplatte (2094) umfasst, die elektrisch mit einer mittleren Batteriezelle verbunden ist, die sich zwischen der der Stromabnahmelasche (2078) am nächsten liegenden Batteriezelle und der von der Stromabnahmelasche (2078) am weitesten entfernten Batteriezelle befindet, und
der Batteriepack ferner eine mittlere elektrische Leitbahn (2114) umfasst, die sich zwischen der Stromabnahmelasche (2078) und der mittleren Batterieanschlussplatte (2094) erstreckt, wobei der Widerstand der mittleren elektrischen Leitbahn (2114) vorzugsweise innerhalb von 10 % des Widerstands der elektrischen Leitbahn (2110) liegt.

9. Batteriepack, umfassend:
Einen positiven Packanschluss (22);
einen negativen Packanschluss (26);
eine Zellenanordnung (18) mit einer ersten Batteriezelle, einer zweiten Batteriezelle und einer dritten Batteriezelle; und
ein Sammelschienenband (6050) mit einem Batterieanschlussbereich (6126) und einer länglichen Verlängerung (6070) aufweist, wobei der Batterieanschlussbereich (6126) einen Lappen (6174) aufweist, der mit der ersten Batteriezelle verbunden ist, und einen weiteren Lappen (6178) aufweist, der mit der zweiten und/oder dritten Batteriezelle verbunden ist, wobei der Lappen (6174) und der andere Lappen (6178) in einem Lappen-Verbindungsbereich (6182) verbunden sind, wobei die längliche Verlängerung (6070) mit dem Batterieanschlussbereich (6126) angrenzend an den Lappen-Verbindungsbereich (6182) verbunden ist, wobei
die erste Batteriezelle so konfiguriert ist, dass sie eine erste elektrische Leitbahn (6110) von der ersten Batteriezelle zur verlängerten Verlängerung (6070) definiert, wobei die erste elektrische Leitbahn (6110) eine erste elektrische Spannung aufweist,
die dritte Batteriezelle so konfiguriert ist, dass sie eine dritte elektrische Leitbahn (6118) von der dritten Batteriezelle zur verlängerten Verlängerung (6070) definiert, wobei die dritte elektrische Leitbahn (6118) eine dritte elektrische Spannung aufweist, und
die dritte elektrische Spannung innerhalb von 5 % der ersten elektrischen Spannung liegt.

10. Batteriepack nach Anspruch 9, wobei
die längliche Verlängerung (6070) eine Stromabnahmelasche (6078) aufweist, und
die Stromabnahmelasche (6078) so konfiguriert ist, dass er elektrisch mit einer der positiven Anschlussklemme (22) und/oder der negativen Anschlussklemme (26) des Batteriepacks verbunden ist.

11. Batteriepack nach Anspruch 9 oder 10, wobei
sich die erste Batteriezelle in einem ersten Abstand von der länglichen Verlängerung (6070) befindet,
sich die dritte Batteriezelle in einem dritten Abstand von der verlängerten Verlängerung (6070) befindet, und
der erste Abstand kürzer als der dritte Abstand ist.

12. Batteriepack nach einem der Ansprüche 9 bis 11, wobei das Sammelschienenband (6050) eine Befestigungslasche zwischen dem Lappen (6174) und dem anderen Lappen (6178) aufweist.

13. Batteriepack, umfassend:
Ein Sammelschienenband (46, 50, 54) mit einer Stromabnahmelasche (78) und einer Vielzahl von Batterieanschlussplatten (62); und
eine Vielzahl von Batteriezellen (30), die an das Sammelschienenband (46, 50, 54) an den Batterieanschlussplatten (62) angeschlossen sind.
wobei
jede der Vielzahl von Batteriezellen (30) so konfiguriert ist, dass sie Strom über eine jeweilige Batterieanschlussplatte (62), der Vielzahl von Batterieanschlussplatten (62), und zur Stromabnehmerlasche (78) entlang einer jeweiligen elektrischen Leitbahn (110, 114, 118) überträgt,
jede jeweilige elektrische Leitbahn einen Leitbahnwiderstand aufweist, und
ein größter Leitbahnwiderstand weniger als 170 % eines kleinsten Leitbahnwiderstands ist.

14. Batteriepack nach Anspruch 13, wobei der größte Leitbahnwiderstand weniger als 140 % des kleinsten Leitbahnwiderstands beträgt, vorzugsweise, wobei der größte Leitbahnwiderstand weniger als 130 % des kleinsten Leitbahnwiderstands beträgt, noch bevorzugter, wobei der größte Leitbahnwiderstand weniger als 110 % des kleinsten Leitbahnwiderstands beträgt, am meisten bevorzugt, wobei der größte Leitbahnwiderstand weniger als 106 % des kleinsten Leitbahnwiderstands beträgt.

## Revendications

1. Bloc-batterie (10), comprenant :
une borne de bloc positive (22) ;
une borne de bloc négative (26) ;
un ensemble d'éléments (18) comportant une pluralité d'éléments de batterie (30) ;
une barrette de barre omnibus (2054) comportant une languette de collecte de courant (2078) et une plaque de connexion de batterie (2090), la plaque de connexion de batterie (2090) étant connectée électriquement à un élément de batterie, parmi la pluralité d'éléments de batterie (30), le plus proche de la languette de collecte de courant (2078) ; et
un chemin électrique (2110) qui s'étend entre la languette de collecte de courant (2078) et la plaque de connexion de batterie (2090), le chemin électrique (2110) comprenant une première partie de chemin (2110A) qui s'étend entre la languette de collecte de courant (2078) et une zone située au-delà de la plaque de connexion de batterie (2090) et une seconde partie de chemin (2110B) qui s'étend entre la zone située au-delà de la plaque de connexion de batterie (2090) et la plaque de connexion de batterie (2090).

2. Bloc-batterie selon la revendication 1, la barrette de barre omnibus (2054) comprenant une barrette intérieure (2134) et une barrette extérieure (2138).

3. Bloc-batterie selon la revendication 2,
la barrette intérieure (2134) étant connectée électriquement à la barrette extérieure (2138) au niveau d'une soudure (2142), et
la première partie de chemin (2110A) se connectant à la seconde partie de chemin (2110B) au niveau de la soudure (2142).

4. Bloc-batterie selon la revendication 2 ou 3, la barrette intérieure (2134) étant constituée d'un premier matériau et la barrette extérieure (2138) étant constituée d'un second matériau différent.

5. Bloc-batterie selon l'une quelconque des revendications précédentes, la barrette de barre omnibus (2054) étant un corps unitaire.

6. Bloc-batterie selon l'une quelconque des revendications précédentes,
la barrette de barre omnibus (2054) comprenant une autre plaque de connexion de batterie (2098) qui est connectée électriquement à un élément de batterie, parmi la pluralité d'éléments de batterie (30), le plus éloigné de la languette de collecte de courant (2078), et
le bloc-batterie comprenant en outre un autre chemin électrique (2118) qui s'étend entre la languette de collecte de courant (2078) et l'autre plaque de connexion de batterie (2098).

7. Bloc-batterie selon la revendication 6, une résistance de l'autre chemin électrique (2118) étant comprise dans une plage de 10 % d'une résistance du chemin électrique (2110) ou bien une résistance de l'autre chemin électrique (2118) étant comprise dans une plage de 5 % d'une résistance du chemin électrique (2110).

8. Bloc-batterie selon la revendication 6 ou 7,
la barrette de barre omnibus (2054) comprenant une plaque de connexion de batterie centrale (2094) qui est connectée électriquement à un élément de batterie central situé entre l'élément de batterie le plus proche de la languette de collecte de courant (2078) et l'élément de batterie le plus éloigné de la languette de collecte de courant (2078), et
le bloc-batterie comprenant en outre un chemin électrique central (2114) qui s'étend entre la languette de collecte de courant (2078) et la plaque de connexion de batterie centrale (2094), de préférence une résistance du chemin électrique central (2114) étant comprise dans une plage de 10 % d'une résistance du chemin électrique (2110).

9. Bloc-batterie, comprenant :
une borne de bloc positive (22) ;
une borne de bloc négative (26) ;
un ensemble d'éléments (18) comportant un premier élément de batterie, un deuxième élément de batterie et un troisième élément de batterie ; et
une barrette de barres omnibus (6050) comportant une zone de connexion de batterie (6126) et une extension allongée (6070), la zone de connexion de batterie (6126) comportant un lobe (6174) connecté au premier élément de batterie et un autre lobe (6178) connecté aux deuxième et/ou troisième éléments de batterie, le lobe (6174) et l'autre lobe (6178) étant connectés au niveau d'une zone de connexion de lobe (6182), l'extension allongée (6070) étant connectée à la zone de connexion de batterie (6126) adjacente à la zone de connexion de lobe (6182),
le premier élément de batterie étant configuré pour définir un premier chemin électrique (6110) entre le premier élément de batterie et l'extension allongée (6070), le premier chemin électrique (6110) ayant une première tension électrique,
le troisième élément de batterie étant configuré pour définir un troisième chemin électrique (6118) entre le troisième élément de batterie et l'extension allongée (6070), le troisième chemin électrique (6118) ayant une troisième tension électrique, et
la troisième tension électrique étant comprise dans une plage de 5 % de la première tension électrique.

10. Bloc-batterie selon la revendication 9,
l'extension allongée (6070) comportant une languette de collecte de courant (6078), et
la languette de collecte de courant (6078) étant configurée pour être connectée électriquement à la borne de bloc positive (22) ou à la borne de bloc négative (26).

11. Bloc-batterie selon la revendication 9 ou 10,
le premier élément de batterie étant à une première distance de l'extension allongée (6070),
le troisième élément de batterie étant à une troisième distance de l'extension allongée (6070), et
la première distance étant plus courte que la troisième distance.

12. Bloc-batterie selon l'une quelconque des revendications 9 à 11, la barrette de barre omnibus (6050) comportant une languette de montage située entre le lobe (6174) et l'autre lobe (6178).

13. Bloc-batterie, comprenant :
une barrette de barre omnibus (46, 50, 54) comportant une languette de collecte de courant (78) et une pluralité de plaques de connexion de batterie (62) ; et
une pluralité d'éléments de batterie (30) connectés à la barrette de barre omnibus (46, 50, 54) au niveau de la pluralité de plaques de connexion de batterie (62),
chaque élément de batterie, parmi la pluralité d'éléments de batterie (30), étant configurée pour transférer de l'électricité à travers une plaque de connexion de batterie (62) respective, parmi la pluralité de plaques de connexion de batterie (62), et vers la languette de collecte de courant (78) le long d'un chemin électrique (110, 114, 118) respectif,
chaque chemin électrique respectif présentant une résistance de chemin, et
une plus grande résistance de chemin étant inférieure à 170 % d'une plus petite résistance de chemin.

14. Bloc-batterie selon la revendication 13, la plus grande résistance de chemin étant inférieure à 140 % de la plus petite résistance de chemin, de préférence la plus grande résistance de chemin étant inférieure à 130 % de la plus petite résistance de chemin, plus préférablement la plus grande résistance de chemin étant inférieure à 110 % de la plus petite résistance de chemin, plus préférablement encore la plus grande résistance de chemin étant inférieure à 106 % de la plus petite résistance de chemin.
